(19) Europäisches Patentamt

European Patent Office

Office européen des brevets

(11) **EP 0 646 622 B1**

(12) **EUROPEAN PATENT SPECIFICATION**

(45) Date of publication and mention
of the grant of the patent:
**13.12.2000 Bulletin 2000/50**

(51) Int. Cl.[7]: **C08L 23/02**, C08L 25/04,
C08J 9/00, B29D 31/00

(21) Application number: **94114897.5**

(22) Date of filing: **21.09.1994**

(54) **Plastic foam material composed of thermoplastic resin and silane-modified thermoplastic resin and method for making same**

Aus thermoplastischem Kunststoff und silan-modifizierten thermoplastischen Kunststoff hergestelltes Schaummaterial und Verfahren zum Herstellen derselben

Mousse plastique formée d'une résine thermoplastique et d'une résine thermoplastique modifiée par un silane et procédé pour leur obtention

(84) Designated Contracting States:
**DE ES FR GB IT NL**

(30) Priority: **21.09.1993 JP 23503793**

(43) Date of publication of application:
**05.04.1995 Bulletin 1995/14**

(73) Proprietor:
**SEKISUI KAGAKU KOGYO KABUSHIKI KAISHA
Osaka-shi Osaka 530 (JP)**

(72) Inventors:
• **Kobayashi, Tomoyuki
Kyoto-Shi, Kyoto, 601 (JP)**
• **Miyazaki, Kenji
Kyoto-Shi, Kyoto 601 (JP)**
• **Nakamura, Masanori
Takatsuki-Shi, Osaka 569 (JP)**

(74) Representative: **Rauh, Helga
Wielandstrasse 4
90419 Nürnberg (DE)**

(56) References cited:
EP-A- 0 181 637          EP-A- 0 279 668
EP-A- 0 280 993          CH-A- 506 017
CH-A- 663 378

• DATABASE WPI Section Ch, Week 8627 Derwent Publications Ltd., London, GB; Class A17, AN 86-172236 XP002012205 & JP-A-61 103 941 (CHISSO) , 22 May 1986
• DATABASE WPI Section Ch, Week 8340 Derwent Publications Ltd., London, GB; Class A17, AN 83-779394 XP002012206 & JP-A-58 142 917 (HITACHI CHEMICAL) , 25 August 1983
• DATABASE WPI Section Ch, Week 9209 Derwent Publications Ltd., London, GB; Class A17, AN 92-069508 XP002012207 & JP-A-04 013 737 (SEKISUI CHEM IND) , 17 January 1992
• DATABASE WPI Section Ch, Week 8632 Derwent Publications Ltd., London, GB; Class A32, AN 86-209577 XP002012208 & JP-A-61 143 450 (SEKISUI CHEM IND) , 1 July 1986
• DATABASE WPI Section Ch, Week 8617 Derwent Publications Ltd., London, GB; Class A17, AN 86-110401 XP002012209 & JP-A-61 053 338 (NIPPON STYRENE PAPER) , 17 March 1986

**Description**

**BACKGROUND OF THE INVENTION**

This invention relates to a plastic foam material. More specifically, this invention relates to a plastic foam material composed of a blended resin composition containing thermoplastic resins and a silane-modified resin (hereinafter referred to as "plastic foam material") and products derived therefrom. The present invention is also directed to a method of making the plastic foam material.

The present invention is also directed to a plastic foam material which has resin walls which include lattice-shaped or honeycomb-shaped cross-sections with foam inside. The present invention also relates to a method for making the same.

The plastic foam material of the present invention and products derived therefrom exhibit improved softness and superior heat-insulating properties. They are thus capable of being used as heat-insulating materials. Because of their softness, superior heat-insulating properties and lightness, products derived from the plastic foam material of the present invention, can be used extensively in many applications in different fields.

Products composed of the plastic foam material of the present invention are well suited for use as building materials. Such building materials include ceilings and installment panels. Due to their superior heat- insulating properties, the plastic foam material will find widespread use as aircraft, train and automobile components such as panels and seating. Various plastic foam material composed of resin compositions are commercially available but almost all of them are inferior in either heat resistance or foam generation. Most prior resin compositions which form prior an plastic foam materials exhibit excessive gel fractions and inner stresses imparting inferior qualities to conventional plastic foam materials and their derived products.

Notwithstanding increased heat resistance properties of conventional plastic foam materials, prior art plastic foam materials are well known for generating less foam and yielding foam materials that have inadequate compression strength. Accordingly, conventional plastic foam materials and their derived products are not suited for use inside buildings, as building materials or as materials for use inside automobiles, trains, and aircraft.

Many attempts have been proposed to overcome the aforementioned drawbacks. Unfortunately, to date the proposed improvements have been insufficient.

One such attempt at improving the overall quality of prior art plastic foam materials, disclosed In Japanese Laid Open Patent Publication **S** 58-134131, includes using a cross-linked polypropylene based resin composition as the starting material. The cross-linked polypropylene based resin composition further includes a silane-modified polypropylene based resin, together with a silanol condensation catalyst and a foaming agent.

However, the proposed resin composition is plagued by numerous drawbacks. Chief among them is the even cross-linking among the various constituents when a cross-linking agent is added to the starting material. Since the starting material includes a polypropylene based resin composition which is thermally grafted by an ethylene type unsaturated silane compound, the entire plastic foam material is evenly cross-linked upon addition of a cross-linking agent, This, in turn, increases the inner stresses within the plastic foam material, particularly upon heating.

Moreover, the amount of the silane-modified resin added to the proposed mixture is excessive compared to the other resin. The excessive silane-modified resin results in even cross-linking among the various constituents, resulting in an increase in the gel fraction of the resulting plastic foam material. The increased gel fraction of the plastic foam material, in turn, causes a subsequent decrease in the moldability of the plastic foam material. The decrease in the moldability properties of the plastic foam material, in turn, results in articles which are considerably weak and easily breakable. The derived products are unable to maintain and retain their shapes, due, in part, to the compromised moldability of the plastic foam material.

In an attempt to improve the compression strength of conventional plastic foam material and products derived therefrom, Japanese Laid-Open Publication No. **S**52-104574 discloses a method for making a foam compound that uses two extruders, where one extruder extrudes a plastic containing a foaming agent to form a core, while the other extruder extrudes plastic to cover the thus formed core. This is injected into a metal mold and foamed.

However, because this method involves the injection into a metal mold of a plastic containing a foaming agent and a separate covering plastic, it is difficult to provide a uniform feed of the plastic containing the foaming agent.

Thus, it is impossible to form a plastic column that penetrates both the front and back of the resulting plastic foam material. It is even less possible to form a plastic column uniformly in the plastic foam material. Thus, the compression strength of the resulting plastic foam material is inadequate.

On the other hand, honeycomb structures are porous and have high compression strength. A honeycomb structure involves a honeycomb form sandwiched between surface materials,

Notwithstanding the presence of the honeycomb structure which increases compression strength, conventional plastic foam materials according to this publication exhibit increased heat conductivity. This is because of the convection which results from an increase in internal space. The honeycomb structure thus imparts inadequate insulating properties to the resulting plastic foam material.

Japanese Laid Open Publication No. 4-151238 also attempts to improve the compression strength of conventional plastic foam materials by using a resin foam material connected to a fiber-reinforced resin layer by a plurality of columns. The space between the layers is filled with foam, except for the space occupied by the resin columns.

However, the reinforcing effect of this resin foam material is ineffective because resin columns are embedded in foam and thus are not continuous. Additionally, to effectively increase the compression strength of the resin foam material, it is deemed necessary to embed a large number of columns, making the resin foam material substantially heavy.

In an attempt to overcome the aforementioned deficiency, Japanese Laid-Open Patent Publication **S**61-59339 discloses a plastic foam material composed of a resin composition containing a copolymer consisting of ethylene and an unsaturated silane, a silanol condensation catalyst and a foaming agent.

According to this publication, a copolymer containing at least ethylene and unsaturated silane compound, among others, can be used instead of the copolymer containing an ethylene like olefin resin and the unsaturated silane copolymer.

However, the proposed plastic foam material composed of the aforementioned resin composition exhibits a high gel fraction and increased thermal deformation. The gel fraction has been reported to be substantially high. The increase in gel fraction and thermal deformation makes such a plastic foam material unsuitable for use in molding the proposed plastic foam material into large objects requiring increased stability.

Japanese Laid Open Patent Publication **S**56-109229 proposes the use of a plastic foam material composed of a silyl-modified ethylene based polymer together with an ethylene based polymer, and a foaming agent.

The proposed resin composition contains a substantial amount of a silane-modified ethylene based polymer per 100 parts by weight of the ethylene based polymer.

However, articles made of the disclosed plastic foam material exhibit increased inner stress. The inner stress, in turn, causes extensive thermal deformation.

Japanese JP-A-4013737 discloses a foaming resin composition consisting of mixing one type of denatured polyolefin resin that is treated with a silicon containing compound and is cross-linked with a compatible unmodified polyolefin resin. The resulting composition possesses inner stresses within the plastic foam material.

None of the prior art references manage to overcome the problem of the high gel fractions and inner stresses.

## OBJECTS AND SUMMARY OF THE INVENTION

It is an object of this invention to provide a plastic foam material and its derived products which overcome the deficiencies associated with prior art plastic foam materials.

It is a further object of this invention to provide a method of making the plastic foam material.

It is still a further object of this invention to provide a plastic foam material which exhibits superior formability in thermoforming and forming products therefrom.

It is yet another object of this invention to provide a resin composition which exhibits minimal thermal deformation when forming a plastic foam material.

It is also a further object of this invention to provide plastic foam material composed of a resin composition which exhibits superior dimensional stability.

It is still a further object of this invention to provide plastic foam material which exhibits superior heat resistance.

It is still a further object of this invention to provide a plastic foam material composed of at least two thermoplastic resins which exhibits improved elongation at high temperature.

It is still a further object of this invention to provide a plastic foam material composed of thermoplastic resins which exhibits superior secondary processing properties when it forms a layered structure in conjunction with a substrate.

It is still a further object of this invention to provide a method for producing plastic foam material which is light and exhibits improved heat-insulation properties.

It is still a further object of this invention to provide a method for producing a plastic foam material which has high compression strength and good resilience.

Briefly stated, the present invention provides a plastic foam material composed of a blended resin composition that includes thermoplastic resins and a silane-modified thermoplastic resin, The blended resin composition includes 100 parts by weight of at least two thermoplastic resins, from about 1 to about 50 parts by weight of a silane-modified thermoplastic resin; from about 0,001 to about 2.5 parts by weight of a cross-linking catalyst which initiates cross-linking reaction by water treatment and from about 1 to about 20 parts by weight of a thermodecomposition foaming agent, as claimed in claim 1.

According to a first embodiment of the invention, the two substantially uncross-linked thermoplastic resins which are substantially incompatible with each other (hereinafter referred to as "two incompatible thermoplastic resins"), while in the second embodiment, the two thermoplastic resins need not be incompatible (hereinafter referred to as "two thermoplastic resins").

The blended resin composition may further include specified amounts of reinforcers such as glass fibers and fillers.

The thermodecomposition foaming agent decomposes at sufficiently high temperatures to yield a plastic foam material. The resulting plastic foam material, in turn, exhibits superior resilience, improved compression strength and superior heat-insulating properties.

According to an embodiment of the present invention, there is provided a plastic foam material which includes 100 parts by weight of a substantially uncross-linked polymer mixture containing at least two substantially incompatible thermoplastic resins selected from the group consisting of a polyethylene, polypropylene, ethylene-propylene copolymer, ethylene-vinyl acetate copolymer, and polystyrene.

The plastic foam material further includes front about 1 to about 50 parts by weight of a silane-modified thermoplastic resin of the same polymer type as at least one of said two incompatible resins, together with from about .001 to about 2.5 parts by weight of a cross-linking catalyst effective to cross-link the silane-modified thermoplastic resin, and from about 1 to about 20 parts by weight of a foaming agent.

According to another feature of the present invention, there is provided a method for preparing a plastic foam material comprising thermoplastic resins, which includes preparing a first mixture containing 100 parts by weight of an uncross-linked polymer mixture containing two incompatible resins selected from the group consisting of a polyethylene, polypropylene, a ethylene-propylene copolymer, an ethylene-vinyl acetate copolymer, and polystyrene.

Added to the first mixture are from about 1 to about 50 parts by weight of a silane-modified thermoplastic resin of the same polymer type as at least one of said two incompatible resins, together with from about 0.001 to about 2.5 parts by weight of a cross-linking catalyst effective to cross-link said silane-modified thermoplastic resin, and from about 1 to about 20 parts by weight of a foaming agent to yield a blended resin composition.

The blended resin composition is thereafter extruded to form one of a strand and a thermoplastic resin sheet material. The resin sheet material is then exposed to a cross-linking source to form a cross-linked thermoplastic resin sheet wherein the cross-linked resin sheet includes only cross-linked silane-modified thermoplastic resin.

This is followed by exposing the cross-linked resin sheet to a foaming heat source to form a plastic foam material,

According to another feature of the present invention, there is provided a method for preparing a plastic foam material comprising thermoplastic resins, which includes preparing a first mixture containing 100 parts by weight of an uncross-linked polymer mixture containing at least two thermoplastic resins selected from the group consisting of polyethylene, polypropylene, and ethylene-propylene copolymer.

Added to the first mixture are from about 1 to about 50 parts by weight of a silane-modified thermoplastic resin of the same polymer type as at least one of the two substantially incompatible thermoplastic resins, together with from about .001 to about 2.5 parts by weight of a cross-linking catalyst effective to cross-link the silane-modified thermoplastic resin, and from about 1 to about 20 parts by weight of a foaming agent to form a blended resin composition.

The blended resin composition is then extruded to form a thermoplastic resin sheet. The resin sheet is then exposed to a cross-linking source to form a cross-linked resin sheet wherein the cross-linked resin sheet includes only cross-linked silane-modified thermoplastic resin.

This is followed by exposing the cross-linked resin sheet to a foaming heat source to form a plastic foam material,

The above, and other objects, feature and advantages of the present invention will become apparent from the following description.

## DETAILED DESCRIPTION OF THE PREFERRED EMBODIMENT

The plastic foam material of the present invention is composed of thermoplastic resins and a silane-modified thermoplastic resin. The starting material for forming the plastic foam material may further include specified amounts of cross linking catalysts and thermodecomposition foaming agents.

## EMBODIMENT 1

According to a first embodiment, a plastic foam material includes a blended resin composition containing thermoplastic resins and a silane-modified thermoplastic resin. The thermoplastic resins include at least two substantially incompatible, uncross-linked thermoplastic resins (hereinafter referred to as "two incompatible thermoplastic resins").

Essentially, the blended resin composition consists of 100 parts by weight of at least two substantially incompatible thermoplastic resins, from about 1 to about 50 parts by weight of a silane-modified resin; from about 0.001 to about 2.5 parts by weight of a cross-linking catalyst for use in a silane compound and from about 1 to about 20 parts by weight of a thermodecomposition foaming agent (hereinafter referred to as "foaming agent").

The plastic foam material exhibiting superior heat-tolerance and compression strength properties of the present invention is composed of the following elements, described hereinafter. All percentages hereinafter referred to are in weight terms (parts by weight) unless otherwise stated.

**Thermoplastic resins**

The thermoplastic resins for use in the blended resin composition are uncross-linked and need not be limited to specific resins, so long as the resins are highly foamable.

The two substantially incompatible thermoplastic resins for use in the blended resin composition include at least two members selected from the group consisting of a polyethylene, polypropylene, a ethylene-propylene copolymer, an ethylene-vinyl acetate copolymer and polystyrene.

The term "propylene" includes at least one of a homopolypropylene, block polypropylene, and random polypropylene. It is preferred that the two substantially incompatible thermoplastic resins include at least two members selected from the group consisting of polyethylene, polypropylene, and polystyrene. In general, highly foamable thermoplastic resins provide for increased "foaming stability".

The degree of polymerization of the aforementioned polyethylene should be from about 500 to 6000, more preferably from 600 to 5000. The degree of polymerization of the aforementioned polypropylene should be from about 800 to 12000, more preferably from 1000 to 10000. The degree of polymerization of the aforementioned polystyrene should be from about 250 to 5000, more preferably from 1000 to 4000. Outside these preferred ranges, the dispersion of the silane-modified, cross-linked, plastic resin is substantially compromised.

**Melt index**

The melt index (hereinafter referred to as "MI") of the two substantially incompatible thermoplastic resins is determined in accordance with Japanese Industrial Standard (JIS) **K**7210.

The MI of the two substantially incompatible thermoplastic resins preferably ranges from about 0.1 to about 50, and more preferably, from about 1 to about 15. When the MI of the two substantially incompatible thermoplastic resin exceeds 50 or falls below 0.1, dispersion of the silane-modified thermoplastic resin substantially deteriorates, which leads to poor foaming performance.

If polyethylene and polypropylene are selected as the two substantially incompatible thermoplastic resins for use in the blended resin composition, then a density of each respective resin is preferably higher than about 0.91 and 0.89 g/cm$^3$, respectively. The plastic foam material becomes markedly weak and exhibits inferior heat resistance properties when the density of at least one of the polyethylene and polypropylene resins falls below the cited values.

Similarly, if ethylene-vinyl acetate copolymer and polystyrene are selected to form the two substantially incompatible thermoplastic resins for use in the blended resin composition, then a density of each respective resin is preferably from about 0.92 to about 0.95 g/cm$^3$ and from about 1.040 to about 1.60 g/cm$^3$, respectively.

When the density of the ethylene-vinyl acetate copolymer falls below 0.92 g/cm$^3$, the rigidity of the plastic foam material deteriorates. A similar effect is observed when the density of the polystyrene falls below 1.040 g/cm$^3$.

On the other hand, when the density of the ethylene-vinyl acetate copolymer exceeds 0.95 g/cm$^3$, the crystallinity of this polymer become high while its dispersion substantially deteriorates. Similar to the ethylene-vinyl acetate copolymer, the crystallinity of polystyrene becomes high with a significant decrease in its dispersion, when the density of the polystyrene exceeds 1.60 g/cm$^3$.

The two thermoplastic resins for use in the present invention according to the first embodiment, are characterized as being substantially incompatible with each other. The two substantially incompatible thermoplastic resins have individual melt indexes (MI). The difference in the MI between the two substantially incompatible thermoplastic resins (hereinafter referred to as "MI") varies from about 3 to about 15 g per 10 minutes.

The weight ratio of the two substantially incompatible thermoplastic resins should be from about 2:8 to about 8:2.

When the MI' exceeds 15 g/ 10 minutes, the "sea and island" structure of the thermoplastic resin composition becomes "rough". Essentially, the size of the "island" becomes too large with poor foaming performance as a consequence.

On the other band, when the difference in the melt index between the two substantially incompatible thermoplastic resins becomes small, the dispersed "sea and island" structure becomes too small or non-existent and poor foaming performance is again the consequence.

When the MI' is from about 3 to about 15 g per 10 minutes, a uniform sea-and-island structure with fine particle size is observed. It is preferable that MI' be from about 7 to about 11 g per 10 minutes.

For purposes of this invention, the term "solubility parameter" refers to the value calculated from the following formula:

$$\sigma = \rho\Sigma Fi/M.$$

where,

$\sigma$ is the solubility parameter,
$\rho$ is the density of the thermoplastic resins,
M is the molecular weight of the monomer which forms the thermoplastic resins, and
Fi is the molar attraction constant of the constituent groups of the monomer.

The degree of incompatibility between the two substantially incompatible thermoplastic resins can be measured and represented as a "solubility parameter". When the degree of incompatibility, i.e., solubility parameter between the aforementioned two substantially incompatible resins falls below 0.1, there is an absence of a uniform sea-structure.

On the other hand, when the degree of incompatibility between the aforementioned two substantially incompatible thermoplastic resins exceeds 2, the difference in the solubility parameter between the two resins becomes small. In this case, no sea-and-island structure is formed. The difference in the solubility parameter between the two substantially incompatible thermoplastic resins should preferably be from about 0.1 to 2, and more preferably, from about 0.2 to 1.5.

It is preferred that the weight ratio of the two substantially incompatible resins be limited to be from about 2:8 to about 8:2, and the areas of the island and the sea in the "sea-and-island" structure be approximately the same.

When a weight fraction of one of the two substantially incompatible thermoplastic resins is high, it becomes exceedingly difficult to obtain a suitable shear viscosity for forming foam. In order to uniformly disperse one of the substantially incompatible thermoplastic resins into the other substantially incompatible thermoplastic resin, it is preferred that the weight ratio of the two substantially incompatible resins be from about 4:6 to about 6:4, and more preferably, 5:5.

**Silane-modified thermoplastic resins**

As mentioned previously, the plastic foam material of the present invention is composed of a blended resin composition. The blended resin composition, in turn, contains at least two thermoplastic resins (i.e., substantially incompatible or compatible) and a silane-modified thermoplastic resin.

The silane-modified thermoplastic resin includes a resin type similar to at least one of the two substantially incompatible thermoplastic resins. The silane-modified thermoplastic resin is capable of being cross-linked with or without the aid of a cross-linking catalyst. The gel fraction of the silane-modified thermoplastic resin, after cross-linking, should be from about 60 to about 85 parts by weight.

The difference in the MI between the silane-modified thermoplastic resin and the substantially incompatible resin of the same polymer type (hereinafter referred to as MI'') is less than 1 g per 10 minutes.

The above mentioned silane-modified resin may include at least one of a conventional silane-modified thermoplastic resin exemplified by a silane-modified thermoplastic resin of polyethylene, a silane-modified thermoplastic resin of polypropylene, a silane-modified thermoplastic resin of an ethylene-vinyl acetate copolymer, a silane-modified thermoplastic resin of polystyrene.

Because of their superior foam forming properties, at least one of polyethylene, polypropylene, and polystyrene as the silane-modified thermoplastic resin is preferred.

For purposes of this embodiment, the term "silane-modified thermoplastic resin" includes thermoplastic resins modified by an unsaturated silane compound by graft polymerization.

An unsaturated silane compound is a compound given by the following general formula:

$$\mathbf{R'SiR''_mY_{3-m'}}$$

where,

**R'** includes an organic functional group, e.g., an alkenyl group such as a vinyl group, an allyl group, a propenyl group or a cyclohexanyl group; a glycidyl group; an amino group; a methacrylic group; a halogenated alkyl group such as a $\gamma$-chloroethyl group or $\gamma$-bromoethyl group;

**R''** includes one of an alkyl group (a saturated aliphatic hydrocarbon group), an aryl group (an aromatic hydrocarbon group), such as a methyl, ethyl, propyl, butyl, phenyl groups, and similar groups;

**m** represents one of 0, 1, or 2;

**Y** is an organic group which can be hydrolyzed;

For example, **Y** may be one of a methoxy group, ethoxy group, formyloxy group, acetoxy group, propionoxy group, alkyl group, aryl amino group, etc. When m equals 0 or 1, **Y** can be either identical or different,

It is preferred that the aforementioned unsaturated silane compound be represented by a general formula

$$CH_2=CHSi(OA)_3$$

where,

**A** includes a hydrocarbon group with 1 to 8 carbon atoms, and more preferably, from 1 to 4 carbon atoms. For example, $CH_2=CHSi(OA)_3$ may be vinyl trimethoxysilane, vinyl triethoxysilane, vinyl triacetoxysilane, etc.

In cases where the silane-modified thermoplastic resin contains a methoxy group, the methoxy group hydrolyzes to yield a hydroxyl group upon contacting water.

The, thus obtained hydroxyl group, in turn, can react with a hydroxyl group of another molecule to form a **Si-O-Si** bond. In essence, two silane-modified thermoplastic resins become cross-linked. It is preferred that a cross-linking catalyst be used to promote the cross-linking reactions.

The gel fraction of the silane-modified thermoplastic resin after cross-linking is limited to from 60 to 85 parts by weight, and more preferably, from 70 to 80 parts by weight. When the gel fraction of the silane-modified thermoplastic resin, after cross-linking, is below 60 parts by weight, the cross-linking density is low, and the foaming properties of the blended resin composition are adversely effected.

To substantially improve the foaming stability of the cross-linked resin, it is advisable to limit the gel fraction of the silane-modified thermoplastic resin to from about 70 to about 80 parts by weight.

The gel fraction is used to indicate the degree of cross-linking and is expressed as the parts by weightage of the residue obtained after xylene extraction at 120°C. To measure the residue resulting from the xylene extraction, a predetermined amount of plastic foam material was immersed in predetermined amount of xylene and kept there at 120°C for 24 hours. This effectively dissolves the uncross-linked portion of the plastic foam material. The contents of the container were then poured through a mesh screen to effectively separate the residue from solution. The resulting residue retained by the screen was collected, dried at 80°C and 10 mm Hg pressure for 5 hours, and weighed.

The amount (parts by weightage) of the resulting residue is calculated by utilizing the formula:

$$\text{Residue (parts by weight)} = (b/a) \times 100$$

where,

a equals initial weight of the sample plastic foam material (gram)

b equals weight of the dried residue collected (gram).

According to the present invention, MI'' should be less than 1 g per 10 minutes.

When MI'' exceeds 1 g per 10 minutes, it becomes increasingly difficult to disperse the silane-modified thermoplastic resin into the aforementioned thermoplastic resin of the same polymer type.

When the amount of the silane-modified thermoplastic resin added to the blended resin composition exceeds 50 parts by weight, the dimensional stability of the plastic foam material substantially deteriorates.

On the other hand, when the total content of the silane-modified thermoplastic resin added falls below 1 part by weight to 100 parts by weight of the two thermoplastic resins, the blended resin composition exhibits decreased elongation viscosity which is required for forming foam.

In order to effectively generate sufficient foam, the blended resin composition should have sufficient elongation viscosity. When the elongation viscosity is decreased, as when the amount of the silane-modified thermoplastic resin added to 100 parts by weight of the two thermoplastic resins falls below 1 part by weight, the attendant decrease in elongation viscosity leads to a halt in foam production.

It is preferable that the amount of the silane-modified thermoplastic resin added to 100 parts by weight of the two thermoplastic resins be from about 5 to about 40 parts by weight, and more preferably from about 10 to 30 part by weight.

**Cross-linking catalyst**

The blended resin composition may further include a cross-linking catalyst for use in a silane compound.

The cross-linking catalyst for use in the present invention can include a cross-linking catalyst effective to catalyze a cross-linking reaction between the silane-modified thermoplastic resin molecules. It need not be limited to any specific cross-linking catalyst. It includes at least one of a dibutyl tin diacetate, dibutyl tin dilaurate, dioctyl tin dilaurate, tin octanoate, tin oleate, lead octanoate, 2-ethyl hexane zinc, cobalt octanoate, lead naphtenate, zinc caprylate, zinc stearate.

The foaming property (the ability of the blended resin composition to form foam at predetermined temperatures) of the blended resin composition deteriorates when the amount of the cross-linking catalyst per 100 parts by weight of the blended resin composition exceeds 2.5 parts by weight. The degree of cross-linking between the constituents to form the plastic foam material is then insufficient.

Similarly, if the amount of the cross-linking catalyst per 100 parts by weight of the blended resin composition falls below 0.001 parts by weight, the cross-linking reaction rate between silane-modified thermoplastic resin molecules is severely hampered and slowed.

Accordingly, it is preferable that the amount of the cross-linking catalyst added to 100 parts by weight of the total of the two thermoplastic resins and silane-modified thermoplastic resin be from about 0.001 to about 2.5 parts by weight, and more preferably from about 0.1 to 1.5 parts by weight.

**Foaming Agent**

A thermodecomposition foaming agent capable of decomposing at high temperatures is added to the blended resin composition. The foaming agent may include one of a conventional thermodecomposition foaming agent exemplified by an azodicarbonamide (1,1'-azobisformamide), azobisisobutylonitrile, N,N'-dinitrosopentamethylene tetramine, 4,4-oxybis(benzene sulfonyl hydrazide) barium azodicarboxylate, trihydrazinotriazine, benzene sulfonyl hydrazide and toluene sulfonyl hydrazide,

Azodicarbonamide (1,1'-azobisformamide) is preferred because of its sensitive decomposition peak temperature.

The ability of the blended resin composition to form foam upon thermal interaction is greatly compromised when the amount of the foaming agent in the blended resin composition falls below 1 part by weight.

On the other hand, the overall strength of the resulting plastic foam material deteriorates when the amount of the foaming agent in 100 parts by weight of the two thermoplastic resins and the silane-modified thermoplastic resin exceeds 20 parts by weight. Additionally, the ability to form uniform foam cells is severely compromised when the amount of the foaming agent exceeds 20 parts by weight. It is preferable that the total amount of the foaming agent be from about 5 to about 15 parts by weight.

**Other Additives**

In addition to the above noted compounds, the blended resin composition may further contain glass fiber. The glass fiber is added to improve the overall strength and the dimensional stability of plastic foam material and its derived products.

The amount of the glass fiber added to the blended resin composition should be such that its addition does not harm the physical properties of the plastic foam material composed of a blended resin composition.

When a diameter of the glass fiber exceeds 30 $\mu$m, the glass fiber makes kneading the blended resin composition exceedingly difficult. On the other hand, when the diameter of the glass fiber falls below about 5 $\mu$m, the glass fiber breaks easily. This, in turn, substantially weakens the plastic foam material.

Accordingly, it is recommended that the average diameter of the added glass fiber be from about 5 to about 30 $\mu$m. It is preferable that the diameter of the glass fiber be from about 7 to about 20 $\mu$m.

When the length of the glass fiber is too great, the cell walls of the plastic foam material may be punctured by the glass fiber, causing a substantial decrease in the overall volume of foam produced.

On the other hand, when the length of the glass fiber is too short, the plastic foam material falls to exhibit a suitable improvement in overall strength. Accordingly, it is preferred that the length of the glass fiber be from about 0.1 to about 10 mm, and more preferably, from about 0.5 to 5 mm.

When the amount of the added glass fiber exceeds 20 parts by weight of the two olefin based resins and the silane-modified thermoplastic resin, the ability of the blended resin composition to form foam is substantially impaired. Alternatively, when the amount of the added glass fiber falls below 1 part by weight, the overall strength of the plastic foam material is impaired. Thus, the amount of the glass fiber to be added is preferably from about 1 to about 20 parts by weight, to 100 parts by weight of the two thermoplastic resins and the silane-modified thermoplastic resin.

**Embodiment 2**

According to a second embodiment of the present invention, the plastic foam material is composed of a blended resin composition which contains thermoplastic resins and a silane-modified thermoplastic resin. The blended resin composition consists of 100 parts by weight of at least two thermoplastic resins, from about 1 to about 50 parts by weight of a silane-modified thermoplastic resin and a thermodecomposition foaming agent.

Described hereinafter, are the various components which form the plastic foam material in accordance with the second embodiment. All parts by weightages hereinafter referred to are in weight terms unless otherwise stated.

**Thermoplastic resins**

Unlike the first embodiment, the uncross-linked thermoplastic resins for use in this embodiment need not be substantially incompatible. Similar to the first embodiment, the thermoplastic resins include at least two resins selected from a group exemplified by polyethylene, polypropylene, and an ethylene-propylene copolymer.

The degree of polymerization of the polyethylene should be from 1,000 to about 10,000, and more preferably, from about 2,000 to 5,000. The dispersion of the polyethylene deteriorates when the degree of polymerization of the polyethylene is either below 1,000 or above 10,000. The deterioration in the dispersion of the polyethylene, in turn, impairs the dispersion of the silane-modified thermoplastic resins.

The degree of polymerization of the polypropylene is from about 5,000 to about 12,000, and preferably, from about 7,000 to 10,000.

The degree of polymerization of the ethylene-propylene copolymer polyethylene should be from 8,000 to about 10,000.

**Melt index (MI)**

The MI of the two thermoplastic resins is determined in accordance with Japanese Industrial Standard (JIS) **K**7210.

The MI of the polyethylene is from about 0.6 to about 20 g per 10 minutes, and preferably, from about 5 to 15 g per 10 minutes. The dispersion of the polyethylene deteriorates when the MI of the polyethylene falls below 5 g per 10 minutes. The deterioration in the dispersion of the polyethylene, in turn, impairs dispersion of the silane-modified thermoplastic resin.

The MI of the polypropylene should be from about 2 to about 25 g per 10 minutes. Outside the aforementioned range, the dispersion of the polypropylene and the silane-modified thermoplastic resins is severely hampered.

The MI of the ethylene-propylene copolymer should be from about 3 to 8 g per 10 minutes. Outside these preferred ranges, the dispersions of the silane-modified thermoplastic resin and the ethylene-propylene copolymer are severely compromised.

The density of the polyethylene should be higher than 0.94 g/cm$^3$. The plastic foam material becomes markedly weak and exhibits inferior foaming performance when the density of the polyethylene falls below 0.94 g/cm$^3$.

The density of the polypropylene should be higher than 0.90 g/cm$^3$.

Similar to the polyethylene and the polypropylene, the plastic foam material becomes markedly weak and exhibits inferior foaming performance when the density of the ethylene-propylene copolymer falls below 0.90 g/cm$^3$.

It is preferred that the ethylene content in the thermoplastic resins is from about 20 to about 80 parts by weight. The dispersion of the silane-modified thermoplastic is impaired when the ethylene content in the two thermoplastic resins for use in the blended resin composition, falls outside the aforementioned preferred range.

**Silane-modified thermoplastic resin**

The silane-modified thermoplastic resin according to this embodiment must be compatible with at least one of polyethylene, polypropylene, and an ethylene-propylene copolymer.

The silane-modified thermoplastic resin may be one of a silane-modified polyethylene, a silane-modified polypropylene, a silane-modified, ethylene-propylene copolymer, etc.

The silane-modified thermoplastic resin may be prepared using a conventional method. For example, a silane-modified polyethylene can be prepared by the reaction of polyethylene with an unsaturated silane compound and an organic peroxide. The silane compound may be represented by

$$\text{Rsir'y}_2$$

where,

**R** includes an organic functional group, e.g., an alkenyl group such as a vinyl group, an allyl group, a propenyl group or a cyclohexanyl group; a glycidyl group; an amino group; a methacrylic group; a halogenated alkyl group such as a γ-chloroethyl group or γ-bromoethyl group;

**Y** represents an organic group that can be hydrolyzed, and

**R'** represents either a **R** group or a **Y** group as defined above.

When the amount of the silane-modified thermoplastic resin falls below 1 part by weight per 100 parts by weight of the two thermoplastic resins, an elongation viscosity of the blended resin composition during thermofoaming becomes insufficient. The decrease in elongation viscosity substantially reduces the output of the plastic foam material.

On the other hand, when the amount of the silane-modified thermoplastic resin exceeds 50 parts by weight per 100 parts by weight of the thermoplastic resin, there is a concurrent enhancement in the foaming stability Further, the ground material cannot be re-extruded and thus it becomes difficult to reuse and reutilize the plastic foam material.

The amount of the silane-modified thermoplastic resin according to this embodiment should preferably be from about 1 to about 50, and more preferably, from about 5 to about 30 parts by weight per 100 parts by weight of the total polyolefin based thermoplastics.

**Cross-linking catalyst**

The cross-linking catalysts are similar to those described previously.

If the amount of the cross-linking catalyst added is insufficient, the cross-linking reaction between the silane-modified thermoplastic resins will not progress. On the other hand, if the amount of the cross-linking catalyst added is too large, the ability of the blended resin composition to produce foam upon thermal decomposition deteriorates.

Accordingly, the amount of the cross-linking catalyst to be added to the blended resin composition should preferably be from about 0.001 to about 10, and more preferably, from about 0.01 to 5 parts by weight of the total amount of the two polyolefin based thermoplastics and the silane-modified thermoplastic resin.

**Foaming Agent**

Similar to the first embodiment, the blended resin composition may further include specified amounts of a thermodecomposition foaming agent.

The foaming agent must be capable of decomposing at sufficiently high temperatures to yield a plastic foam material. Similar to the other embodiments, the foaming agent includes at least one of a azodicarbonamide (1,1'-azobisformamide), azobisisobutylonitrile, N,N'-dinitrosopentamethylene tetramine, 4,4'-oxybis(benzene sulfonyl hydrazide) also known as p,p'-oxybis(benzene sulfonyl hydrazide), barium azodicarboxylate, trihydrazinotriazine, benzene sulfonyl hydrazide, toluene sulfonyl hydrazide.

The ability of the blended resin composition to form foam upon thermal decomposition is greatly compromised when the amount of the foaming agent in the blended resin composition falls below 1 parts by weight.

On the other hand, the overall strength of the resultant plastic foam material deteriorates when the amount of the foaming agent in the blended resin composition exceeds 20 parts by weight. Additionally, the ability to form uniform foam cells is severely compromised when the amount of the foaming agent in the blended resin composition exceeds 20 parts by weight. Accordingly, the total amount of the foaming agent per 100 parts by weight of the two thermoplastic resins and the silane-modified thermoplastic resin should be from about 1 to about 20 parts by weight.

**Other additives**

In addition to the aforementioned polyolefin based thermoplastic resins, the silane-modified thermoplastic resin, the cross-linking catalyst and the foaming agent, the blended resin composition may further include specified amounts of glass fiber.

Similar to the first embodiment, the amount of the glass fiber added to the blended resin composition should be such that its addition does not harm the physical properties of the plastic foam material composed of a blended resin composition.

The glass fiber is added to improve the overall strength and dimensional stability of the plastic foam material.

The preferred diameters of the glass fiber are similar to the first embodiment. The amount of the glass fiber added to 100 parts by weight of the two thermoplastic resins and the silane-modified thermoplastic resin is similar to the first embodiment.

Similar to the previous embodiment, when the length of the glass fiber is too great, the cell walls of the plastic foam material can be punctured by the glass fiber, causing a substantial decrease in the overall volume of foam produced.

On the other hand, when the length of the glass fiber is short, the plastic foam material fails to exhibit the desired improvement in overall strength. Accordingly, it is preferred that the length of the glass fiber be at least 3 mm.

**Preparation of the blended resin composition and its derived plastic foam material:**

For the purposes of this invention, the blended resin composition is prepared from one of two possible general types of compositions.

In the first (Type I, in accordance with embodiment 2), predetermined amounts of (1) two uncross-linked thermoplastic resins selected from the group consisting of polyethylene, polypropylene, and an ethylene-propylene copolymer, (2) a silane-modified thermoplastic resin, (3) a cross-linking catalyst for the silane-modified thermoplastic resin, and (4) a thermodecomposing foaming agent are mixed by kneading in a conventional kneading machine.

In the second (Type II, similar to embodiment 1), predetermined amounts of (1) two substantially incompatible uncross-linked thermoplastic resins, (2) a silane-modified thermoplastic resin, (3) a cross-linking reagent for the silane-modified thermoplastic resin and (4) a thermodecomposing foaming agent are mixed by means of melt kneading in a conventional kneading machine,

The thermoplastic resin of either type composition is kneaded and molded into shapes of plate, sheet, or tube, etc. It is usually molded into a thermoplastic resin sheet at a temperature sufficient to prevent decomposition of the foaming agent or initiation of the cross-linking reaction. The method used to form the articles may include extrusion and similar processes.

A kneading machine for use in the mixing may include a conventional single screw extruder, a twin screw extruder, a Banbury type mixer, a kneader mixer, a roller, or any other suitable apparatus.

The kneaded resin of either type is rolled or extruded to form a resin sheet The resulting thermoplastic resin sheet is next subjected to a process called "water treatment" in order to effectively cross-link only the silane-modified, cross-linked resin component of the thermoplastic resin sheet. During the water treatment, the thermoplastic resin sheet is heated to a temperature sufficient to initiate the cross-linking catalyst but lower than the thermodecomposition temperature of the foaming agent. Only the molecules of the silane-modified thermoplastic resin are cross-linked together. After the cross-linking reaction, the blended resin composition is heated to a temperature higher than the decomposition temperature of the type foaming agent.

During the water treatment, the foamable resin composition can be treated by methods other than immersing the blended resin composition in water. For example, the blended resin composition can be treated by exposure to steam.

The temperature of the water treatment for Type I compositions should generally be from about 50°C to about 130°C. Pressurized conditions are necessary for temperatures above 100°C. If the temperature of the water is too low, the reaction rate is too slow and the time needed to complete cross-linking is too long. The preferred time for water treatment is at least 2 hours to assure complete cross-linking of the silane-modified thermoplastic resin component.

The temperature of the water treatment for Type II blended resin compositions is preferably from about 50 to about 130°C, and more preferably, from about 80 to 120°C, When the water treatment temperature is too high, the resin composition tends to fuse together. This leads to poor expansion ratios during the foaming process. If the temperature of the water treatment is too low, the cross-linking reaction time is too long and the cross-linking reaction may not go to desired completion.

The thus obtained thermoplastic resin sheet of either type composition with the cross-linked silane-modified thermoplastic resin component is then heated in an oven above the decomposition temperature of the foaming agent. This heating step forms a foam material upon thermal decomposition of the foaming agent. Alternatively, the resin sheet with the cross-linked silane-modified thermoplastic resin component may be placed in a heating roller and heated to form the plastic foam material. Alternatively, the resin sheet with the cross-linked silane-modified thermoplastic resin component can be placed in a mold and heated to form the foam material.

According to this invention, for Type II compositions, of the two uncross-linked thermoplastic resins, the particle size of the resin with the lower melt index importantly affects the melt-kneading of the blended resin. When the particle size of the uncross-linked polyolefin based resin with the lower melt-index is too large, the dispersion of the uncross-linked thermoplastic resins becomes poor and the foaming property of the blended resin composition deteriorates.

It is preferred that the particle size of the uncross-linked thermoplastic resin with lower melt-index be smaller than about 50 μm, desirably, smaller than about 10 μm.

The heating time to decompose the foaming agent should be sufficiently long to assure complete foaming/ foam formation/ foam generation. It is preferred that the heating time be longer than 30 seconds.

After the water treatment of the blended resin of Type I composition, but before the thermal foaming step, the blended resin composition may be covered by an inorganic fabric sheet. This is desirable because it forms a plastic foam material with less thermal deformation.

After the water treatment of the polyolefin resin of Type II composition, but before the thermal foaming step, the learnable resin composition may be sandwiched between two inorganic fabric sheets. This is desirable because it improves the dimensional stability of the resulting plastic foam material.

The aforementioned inorganic fabric sheets can be any conventional inorganic fabric sheet. For example, a sheet made from rock wool, a sheet made from carbon fiber, a glass cloth, a surfacing sheet may be suitably used as an inorganic fabric sheet noted above. The glass cloth is woven of glass thread which is obtained by converging glass fibers. The surfacing sheet is obtained from piling glass fibers randomly to a uniform thickness and binding with an adhesive,

Examples embodying the blended resin composition of the present invention are described hereinafter.

**Examples 1-6 and 9-10 and Comparative Examples 1-2**

Predetermined amounts of high density polyethylene, polypropylene, ethylene-propylene copolymer, silane-modified polyethylene, silane-modified polypropylene, azodicarbonamide, and dibutyl tin dilaurate as set forth in Table 1 are mixed in a twin-screw extruder to give various resin compositions of Type I.

The screw of the twin-screw extruder used has a diameter of 30 mm. The blended resin composition obtained from the extruder is cylindrical and is 2 mm in diameter.

Subsequently, the blended resin composition obtained from the extruder is rolled by a cooling roller to form a 0.7 mm thick material. The 0.7 mm thick material is cut and pelletized by a right angular pelletizer. The pellets obtained are then subjected to a water treatment for 2 hours where the temperature of the water for immersion is kept at 99°C.

The water-treated, pelletized, blended resin composition is put in an air oven at 210°C where the pellets of the resin composition are fused together, to allow the formation of plastic foams to take place and the plastic foamed material of the resin composition is obtained after cooling in air.

The expansion ratio, the melt index, and the parts by weightage of shrinkage of the plastic foam material of the resin composition are measured following the methods described below and the results are shown in Table 1.

**Table 1**

| | Example | | | | | | | | | | Comparative Example | |
|---|---|---|---|---|---|---|---|---|---|---|---|---|
| | 1 | 2 | 3 | 4 | 5 | 6 | 7 | 8 | 9 | 10 | 1 | 2 |
| High density polyethylene | 50 | 50 | 50 | 50 | - | 40 | 50 | 50 | 50 | 50 | 50 | 50 |
| Polypropylene | 50 | 50 | 50 | - | 50 | 40 | 50 | 50 | 50 | 50 | 50 | 50 |
| Ethylene-propylene copolymer | - | - | - | 50 | 50 | 20 | - | - | - | - | - | - |
| Silane-modified polyethylene | 5 | 15 | - | 15 | - | 15 | 5 | 5 | 30 | 40 | - | 60 |
| Silane-modified polypropylene | - | - | 15 | - | 15 | - | - | - | - | - | - | - |
| Dibutyl tin dilaurate | 0.25 | 0.75 | 0.75 | 0.75 | 0.75 | 0.75 | 0.25 | 0.25 | 1.50 | 1.50 | - | 1.50 |
| Azodicarbonamide | 8 | 8 | 8 | 8 | 8 | 8 | 8 | 8 | 8 | 8 | 8 | 8 |
| Expansion Ratio | 10.2 | 11.0 | 9.8 | 10.6 | 9.4 | 10.8 | 10.2 | 10.2 | 10.0 | 9.0 | NMF | 7.0 |
| Melt viscosity index (g/10 min.) | 0.8 | 0.3 | 1.0 | 0.2 | 0.9 | 0.7 | 0.3 | 0.3 | 0.08 | 0.05 | 2.8 | 0.02 |
| Percentage of shrinkage (%) | 0.10 | 0.15 | 0.10 | 0.15 | 0.10 | 0.10 | 0.05 | 0.10 | 0.30 | 0.50 | 0.05 | 0.75 |

Note: NMF means "Not Meaningful." No stable foaming.

**Example 7**

The water-treated, pelletized, blended resin composition obtained from Example 1 was layered with glass paper FEO-025 (approximate weight, 25 g/m$^3$, provided by Oribest Co, Ltd.) to give a layered, blended resin composi-

13

tion. This was further clamped by a Chuko Flow G-Type belt (manufactured by Chuko Kasei Kogyo) and heated to form a glass paper-layered, plastic foam material that was 180 mm long, 300 mm wide, and 5 mm thick. The approximate weight of the glass paper-layered, plastic foam material obtained was 700 g/m$^2$.

**Example 8**

Similar to Example 7, except that a surfacing sheet SM-3600-E (approximate weight, 30 g/m$^2$, provided by Asahi Glass) was substituted for the glass paper. This example yielded a plastic foam material that was also 180 mm long, 300 mm wide, and 5 mm thick. The approximate weight of the glass paper-layered, plastic foam material obtained was also 700 g/m$^2$.

**Examples 11-22 and 25 and Comparative Examples 3 -10**

Predetermined amounts of the uncross-linked plastic resins polyethylene, polypropylene, ethylene-propylene copolymer, ethylene-vinyl acetate copolymer, polystyrene and a silane-modified cross-linked plastic resin as set forth by Table 2, in addition to 0.1 part by weight of dibutyl tin

**14**

**Table 2**

| Material | Melt Index | Example 11 | 12 | 13 | 14 | 15 | 16 | 17 | 18 | 19 | 20 | 21 | 22 | 23 | 24 | 25 | Comparative Example 3 | 4 | 5 | 6 | 7 | 8 | 9 | 10 |
|---|---|---|---|---|---|---|---|---|---|---|---|---|---|---|---|---|---|---|---|---|---|---|---|---|
| Polyethylene | 1.5 | 50 | 50 | | | | | | | | | | | 50 | 50 | 50 | 50 | 10 | 90 | | | 50 | 50 | 50 |
| Polyethylene | 9 | | | | | | | | | | | 50 | 50 | | | | | | | | | | | |
| Polyethylene | 11 | | | 30 | 70 | 50 | | | | | | | | | | | | | | 50 | 50 | | | |
| Polyethylene | 20 | | | | | | | | | | | | | | | | | | | | | | | |
| Polyethylene | 0.35 | | | | | | | 50 | | | | | | | | | | | | | | | | |
| Polyethylene | 0.6 | | | | | | 50 | | | | | | | | | | | | | | | | | |
| Polypropylene | 1.2 | 50 | 50 | 70 | 30 | 50 | 50 | 50 | 50 | 50 | | | | 50 | 50 | 50 | 50 | 90 | 10 | 50 | 50 | | 50 | 50 |
| Polypropylene | 11 | | | | | | | | 50 | | | | | | | | | | | | | | | |
| Polypropylene | 2.0 | | | | | | | | | | 50 | | | | | | | | | | | 50 | | |
| Ethylene vinyl acetate copolymer | 3 | | | | | | | | | 50 | | 50 | | | | | | | | | | | | |
| Polystyrene | 3 | | | | | | | | | | | | 50 | | | | | | | | 20 | | | |
| Silane modified cross-linked polyethylene | 10 | | | | | | | | | | | 20 | 20 | | | | | | | | | | | |
| Silane modified cross-linked polypropylene | 10 | 20 | 5 | 20 | 20 | 20 | 20 | 20 | 20 | 20 | 20 | | | 20 | 20 | 30 | | 20 | 20 | 20 | | 20 | 60 | 80 |

dilaurate, and 15 parts by weight of azodicarbonamide are fed to a tumbler and mixed to from various mixtures.

The azodicarbonamide is used as the themodecomposition type foaming agent whereas the dibutyl tin dilaurate is used as the cross-linking catalyst. The mixtures are mixed in a twin-screw extruder and melt-kneaded at 180°C to give various Type II resin compositions.

Similar to the Type I composition examples above, the screw of the twin-screw extruder used had a diameter of 30 mm. The blended resin composition obtained from the extruder was cylindric and was 2 mm in diameter.

Subsequently, the blended resin composition obtained from the extruder was rolled by a cooling roller to form a 0.7 mm thick material. The 0.7 mm thick material was cut and pelletized by a right angular pelletizer. The pellets obtained were then subjected to a water treatment for 2 hours where the temperature of the water for immersion is kept at 99°C.

The water-treated, pelletized, blended resin composition was put in an air oven at 210°C where the pellets of the resin composition were fused together, to allow the formation of plastic foams to take place and the plastic foamed material of the resin composition was obtained after cooling in air.

The expansion ratio, formability, and percentage of shrinkage of the plastic foam material of the resin composition were measured following the methods described below and the results are shown in Table 3.

Table 3

|  |  | Expansion Ratio | Thermal Shrinkage | Formability |
|---|---|---|---|---|
| Example | 11 | 30 | 0.25 | 100 |
|  | 12 | 15 | 0.15 | 120 |
|  | 13 | 25 | 0.25 | 80 |
|  | 14 | 15 | 0.25 | 100 |
|  | 15 | 20 | 0.25 | 140 |
|  | 16 | 25 | 0.25 | 80 |
|  | 17 | 20 | 0.25 | 70 |
|  | 18 | 20 | 0.25 | 100 |
|  | 19 | 20 | 0.25 | 100 |
|  | 20 | 25 | 0.25 | 110 |
|  | 21 | 25 | 0.25 | 100 |
|  | 22 | 20 | 0.25 | 100 |
|  | 23 | 30 | 0.25 | 60 |
|  | 24 | 30 | 0.25 | 60 |
|  | 25 | 30 | 0.35 | 50 |
| Comparative Example | 3 | 3 | 0.05 | 130 |
|  | 4 | 5 | 0.25 | 50 |
|  | 5 | 2 | 0.25 | 50 |
|  | 6 | 10 | 0.25 | 120 |
|  | 7 | 11 | 0.25 | 120 |
|  | 8 | 11 | 0.25 | 40 |
|  | 9 | 20 | 0.75 | 20 |
|  | 10 | 15 | 0.90 | 10 |

**Example 23**

The water-treated, pelletized, blended resin composition obtained from Example 11 was layered with glass paper FEO-025 (approximate weight, 25 g/m$^2$, provided by Oribest Co., Ltd) to give a layered, blended resin composition. This was further clamped by a Chuko Flow G-Type belt (manufactured by Chuko Kasei Kogyo) and heated to form a glass paper-layered, plastic foam material that was 180 mm long, 300 mm wide, and 5 mm thick. The approximate weight of the glass paper-layered, plastic foam material obtained was 700 g/m$^2$.

16

### Example 24

Similar to Example 23, except that a surfacing sheet SM-3600-E (approximate weight, 3.0 g/m$^2$, provided by Asahi Glass) was substituted for the glass paper. This example yielded a plastic foam material that was also 180 mm long, 300 mm wide, and 5 mm thick. The approximate weight of the glass paper-layered, plastic foam material obtained was also 700 g/m$^2$

### Expansion Ratio

The density of the pellet of the pelletized, blended resin composition before the formation of the plastic foam material was measured and designated "$d_1$". After the formation of plastic foam material, a density of the plastic foam material composed of the blended resin composition was measured and designated "$d_2$". The expansion ratio was calculated as the ratio expressed as $d_1/d_2$.

### Percentage of Thermal Shrinkage

The resulting plastic foam material was cut into various plate-shaped pieces measuring 200 mm long, 20 mm wide, 5 mm thick. The thus obtained small plate-shaped plastic foam pieces were heated to 180°C and drawn by about 10 percent to form pieces measuring about 220 mm long. The 220 mm long, drawn plastic foam pieces were then charged in an oven and heated to 80°C for 24 hours.

The length of the thermally shrunk, plastic foam material ($l_1$) was measured in mm and the percentage of thermal shrinkage was calculated from the Equation below:

$$\text{Percentage of Thermal Shrinkage} = (100) \times (220 - l_1)/(220).$$

### Formability

The thus obtained plastic foam material was cut into 200 mm long, 200 mm wide, 5 mm thick, small, plate-shaped, samples.

Formability (the ability to mold the plastic foam material into plastic articles) of the plate-shaped samples was determined by various methods. One method included the use of a cylindrical shaped object having a circular cross-section. The mouth of the cylindrical object included flanges around the mouth. The bottom portions of the mouth was circular having an 8 cm diameter. This cylindrical object included a pre-determined depth.

The surfaces of the aforementioned plate-shaped samples were heated to 180°C. The respective mouths of each cylindrical member was covered by the heated plate-shaped samples.

Using a circular column member with a 7 cm diameter, the plate-shaped samples were pushed into the mouths of the cylindrical members. At a time just prior to breakage of the plate-shaped samples, a depth (h) (cm) of the circular column pushed inside the mouth of a cylinder-like member was measured,

A drawing ratio defined by the equation below was obtained and used as the index of formability. It was determined that a large drawing ratio was indicative of superior formability.

$$\text{Drawing ratio} = 100 \times h / 8$$

In Comparative Example 3, the blended resin composition exhibited insufficient shear viscosity. Generally, insufficient shear viscosity compromises the ability of the blended resin composition to produce significant foam, during the foaming process. The inability to form foam, can be attributed to the absence of a silane-modified polypropylene resin. A lack of suitable shear viscosity suitable for forming foam, in turn, impairs the expansion ratio of the plastic foam material.

In Comparative Example 4, the prior art blended resin composition also exhibits insufficient shear viscosity. This insufficiency, in turn, imparts a low expansion ratio to the resulting plastic foam material. The insufficient shear viscosity and low foam production is due to excess amounts of at least one of the two substantially incompatible resins in the resin composition.

Similar to Comparative Example 4, Comparative Example 5 also indicates a low shear viscosity. The insufficient shear viscosity and its attendant low foam production can be attributed to excessive amount of one of the polyolefin (uncross-linked) thermoplastic resins such as polyethylene 1.

In Comparative Example 6, it seems apparent that there is a lack of a uniform sea-and-island structure. This deficiency can be traced to the similar melt indexes of the two substantially incompatible thermoplastic resins, i.e., polyethylene 3 and polypropylene 2. The absence of the sea-and-island structure is believed to impart a low expansion ratio to the plastic foam material.

In Comparative Example 7, even though the two substantially incompatible thermoplastic resins are different from the one used previously in Comparative Example 6, the overall effect on the plastic foam material is similar to Comparative Example 6. The low expansion ratio of the plastic foam material is due to the similar melt indexes of the added two substantially incompatible resins.

In Comparative Example 8, the absence of a uniform sea-and-island structure can be traced to the infinitesimal difference (less than 0.3 g per 10 minutes) between the melt indexes of the two substantially incompatible polyolefin based thermoplastic resins, exemplified by polyethylene 1 and polypropylene 1. The absence of a uniform sea-and-island structure imparts a low expansion ratio to the plastic foam material,

It seems clear from the test results that one of the two substantially incompatible thermoplastic resins can be finely and evenly dispersed in the remaining one thermoplastic resin, forming a "micro" sea-and-island structure.

Because of its specific correlation with the two thermoplastic resins, the silane-modified thermoplastic resins also can be uniformly dispersed in the blended resin composition. The blended resin composition, as whole, has a shear viscosity suitable for forming foam.

This in turn yields a plastic foam material with a high expansion ratio. The blended resin composition is characterized as having an uncross-linked portion, with improved fluidity. This feature, in turn, imparts superior formability properties to the plastic foam material. Furthermore) the blended resin composition of this invention is re-utilizable.

The portion with low cross-linking density can be re-melted. The portion with high cross-linking density can be used as filling material. On the other hand, the amount of the silane-modified, thermoplastic resin added is limited to less than 50 parts by weight per 100 parts of the blended resin composition.

During the foaming process, the aforementioned limitation substantially reduces the undesirable inner stress caused by cross-linking. Accordingly, the plastic foam material obtained from such a blended resin composition exhibits excellent dimensional stability.

Described hereinafter is embodiment 3 encompassing a method for producing a plastic foam material which is light weight, and exhibits improved heat-insulating properties, has increased compression strength and good resilience.

## EMBODIMENT 3

According to the third embodiment, a plastic foam material is formed from a thermoplastic core foam material (hereinafter referred to as "core material") which is integrally placed within each lattice or hexagonal space of a thermoplastic cover foam material (hereinafter referred to as "cover material") having a cross-section with a lattice or honeycomb shape. The cover material includes at least one of a cover material and a thermoplastic resin.

The expansion ratio of the core material is from about 10 to about 50, while the expansion ratio of the cover material is lower than the expansion ratio of the core material, with the difference of the expansion ratios being at least 5 or greater. The present embodiment can also include thermoplastic core foam materials (hereinafter referred to as "thermoplastic material") formed integrally in each lattice or hexagonal space of a thermoplastic resin body having cross-section with a lattice or honeycomb shape.

The cover material, the core material and the thermoplastic resin body above include a thermoplastic resin which can be used individually or in combination with other resins. Such a thermoplastic resin includes at least one of an olefin resin such as low-density polyethylene, high-density polyethylene, straight-chain low-density polyethylene, random polypropylene, homopolypropylene, block polypropylene, polyvinyl chloride, chlorinated polyvinyl chloride, ABS resin, polystyrene, polycarbonate, polyamide, polyvinylidene fluoride, polyphenylene sulfide, polysulfone, polyether ether ketone, or copolymers thereof.

It is desirable to use one or a mixture of an olefin resin such as low-density polyethylene, high-density polyethylene, straight-chain low-density polyethylene, random polypropylene, homopolypropylene, or block polypropylene as the thermoplastic resin in the cover material, the core material, and the thermoplastic material because the final plastic foam material will exhibit improved resiliency. In particular, high-density polyethylene and homopolypropylene are especially desirable.

Identical or different thermoplastic resins can be used for the cover material and the core material, as well as the resin body and the core material.

The thermoplastic resins used in the cover material and the core material can be cross-linked if necessary. Cross-linking is advantageous because it improves the expansion ratio and allows the final plastic foam material to be light.

It is possible to add a reinforcing agent such as short-fiber glass, short-fiber carbon, or short-fiber polyester or a filler such as calcium carbonate, aluminum hydroxide, or glass powder to the thermoplastic resins used in the cover material, the core material, and the resin body in order to improve the strength of the plastic foam material.

When short fibers are added as a reinforcer, too much fiber can cause cell destruction during foaming, thus preventing a high expansion ratio. Very little fiber content can substantially decrease the reinforcing effect on the plastic foam material.

Therefore it is desirable to use from about 1 to about 20 parts by weight of the short fiber per 100 parts by weight of the thermoplastic resins used in the cover material, the core material, and the resin body. Using from about 3 to about 10 parts by weight is especially desirable.

The length the of the short fibers is similar to the previous embodiments.

When adding a filler, it is desirable to add from about 10 to about 100 parts by weight of the filler per 100 parts by weight of the thermoplastic resins for use in forming the cover material, the core material and the thermoplastic resin.

If too much filler is added, the resulting plastic foam material is too heavy. If too little is added, the resulting plastic foam material is inadequately reinforced. It is preferable to add from about 30 to about 50 parts by weight of the filler.

An increase in the expansion ratio of the core material causes a subsequent increase in the radial heat transfer of the plastic foam material which, in turn, increases heat conductivity of the plastic foam material while decreasing its insulating properties.

If the expansion ratio of the core material is too low, the resulting plastic foam material is too heavy. Therefore the expansion ratio of the core material should be from about 10 to about 50, more preferably from about 10 to about 50, and most preferably from about 15 to about 40. A expansion ratio of from 15 to about 30 is especially desirable.

If the core material is too thick, the plastic foam material is substantially weakened. If it is the core material is very thin, the resulting plastic foam material becomes heavy. Therefore a thickness of from about 10 to about 200 mm is desirable, and preferably from about 20 to about 100 mm.

The thickness of the core material does not need to be uniform. It can be non-uniform. The thickness of the core material referred to here refers to the maximum thickness measured along a cross section.

The expansion ratio of the cover material should be lower than the expansion ratio of the core material. The difference between the expansion ratios should be at least 5 or greater. However, if the difference between the two materials is less than 5, the strength of the plastic foam material is compromised, resulting in a weak foam material.

Therefore, it is preferred that the differences in the expansion ratios between the core and the cover materials be from about 5 to about 39, and more preferably from about 15 to about 29.

If the cover material is too thick, the plastic foam material is heavy, while if it is too thin, the strength of the plastic foam material is too low. Therefore the cover material should measure from about 0.05 to about 5 mm in thickness, and more preferably from about 0.1 to about 2 mm.

If the thermoplastic resin body is too thick, the plastic foam material is heavy, while if it is too thin, the strength of the plastic foam material is low. Therefore the resin body should measure from about 0.05 to about 30 mm in thickness, and more particularly from about 0.1 to about 2.0 mm.

The thickness of the cover material and the resin body can be either uniform or non-uniform. The thickness of the cover material and the thermoplastic resin body referred to here refers to the average thickness of the walls forming the lattice or honeycomb along the cross section of the plastic foam material.

If the proportion of the cover material in the plastic foam material is too high, the plastic foam material is too heavy. If it is very low, the strength of the plastic foam material decreases, Therefore the amount of the cover material in the plastic foam material should be from about 10 to about 50 parts by weight, with 10 to about 30 parts by weight being preferred.

For similar reasons, it is desirable that the proportion of the thermoplastic resin body in the plastic foam material be from about 5 to about 35 parts by weight, with from about 8 to about 25 parts by weight being preferred.

The plastic foam material of the present embodiment comprises a cover material and a core material, or a thermoplastic resin body and a core material wherein a cross section of the cover material and the thermoplastic resin body forms a lattice shape or a honeycomb shape. The use of a thermoplastic resin body in conjunction with a honeycomb shape is advantageous because it improves rigidity in the thickness-direction of the plastic foam material. The shapes of the spaces in the lattice do not have to be identical.

In the present embodiment, honeycomb refers to a cross-section having the shape of cells in a bee hive. Specifically, it refers to hexagonal shapes extended in two dimensions so that each side of each of the hexagons are shared with other hexagons. The hexagons do not have to be identical in shape, and do not have to have to be equilateral as long as they can be identified as hexagons by sight.

The plastic foam material of the present embodiment comprising a cover material and a core material, or a thermoplastic resin body and a core material, is generally formed as a sheet. However, the method of integrating the cover material and the core material, or the thermoplastic resin body and the core material, is not particularly specified.

Thermal fusion is generally used, but an adhesive material can also be used, In thermal fusion, if different thermoplastic resins are used for the cover material and the core material, or the thermoplastic resin body and the core material, the thermoplastic resins must be capable of being thermally fused to each other.

The following combinations are examples of suitable thermoplastic resins which can be thermally fused with one another: high-density polyethylene and low-density polyethylene, high-density polyethylene and straight-chain low-density polyethylene, high-density polyethylene and homopolypropylene, and polyvinyl chloride and polyvinyl acetate.

The following combinations are desirable because they improve the strength and resilience of the final plastic foam material: high-density polyethylene and low-density polyethylene, high-density polyethylene and straight-chain low-density polyethylene, and high-density polyethylene and homopolypropylene. In particular, the combination of high-density polyethylene and homopolypropylene is especially desirable.

The polymer for use in forming the adhesive material must be capable of effectively joining the cover material and the core material or the thermoplastic resin and the core material. Suitable polymers for the adhesive material include ethylene vinyl acetate, ethylene vinyl chloride copolymer, a copolymer of the thermoplastic resin monomers forming the cover material and the core material, and a copolymer of the thermoplastic resin monomers used for forming the thermoplastic resin body and the core material.

To improve the adhesive properties of the adhesive, a copolymer of the monomers from the thermoplastic resin used for forming the cover material, the core material, or the thermoplastic resin body is preferred.

The method of making the "plastic foam material" of the present embodiment may include one of the following methods:

**(1)** Using a plurality of foamable pieces, wherein each one of the plurality of foamable pieces have identical heights and are arranged on a first thickness regulating body. Each one of the plurality of foamable pieces is positioned such that its lower surfaces touches the first thickness regulating body. This allows the adjacent cover materials to fuse together. When foaming takes place, adjacent cover materials fuse together. Upon foaming, the adjacent cover materials fuse together.

Identical pieces which have the same height comprise: (a) a column-shaped core material made of a high-foaming resin containing a thermoplastic resin and a foaming agent, and (b) one of a low-foaming resin cover material containing a thermoplastic resin and a foaming agent and a resin cover material containing a thermoplastic resin covering at least a side-surface of the column-shaped core material.

This plurality of shaped foam pieces are used to form a stacked body which is created by arranging a second thickness regulating body on top. The body is heated and foamed while a fixed interval between the thickness regulating bodies is maintained,

**(2)** Using a plurality of shaped foam pieces having the same height which comprises: (a) a column-shaped core material made of a high-foaming resin containing a thermoplastic resin and a thermodecomposing foaming agent, and (b) a low-foaming resin cover material containing a thermoplastic resin and a thermodecomposing foaming agent or a resin cover material containing a thermoplastic resin covering the entire surface of the column-shaped core material. This plurality of shaped foam pieces is arranged on a first thickness regulating body so that they do not overlap and so that adjacent cover materials fuse together during foaming. A stacked body created by arranging a second thickness regulating body on top is heated and foamed while a fixed interval between the thickness regulating bodies is maintained.

**(3)** Using a plurality of shaped foam pieces having the same height which comprises: (a) a column-shaped core material made of a high-foaming resin containing a thermoplastic resin and a thermodecomposing foaming agent, and (b) a low-foaming resin cover material containing a thermoplastic resin and a thermodecomposing foaming agent or a resin cover material containing a thermoplastic resin covering at least the side-surface of the column-shaped core material. This plurality of shaped foam pieces is arranged on a first thickness regulating body so that one shaped foam piece is arranged for each point and inner area of hexagon in a honeycomb shape which is hypothetically arranged on the first thickness regulating body. The arrangement is such that bottom surfaces of the foam pieces touch the first thickness regulating body, and adjacent cover materials fuse together during foaming.

A stacked body is created by arranging a second thickness regulating body on top. The stacked body is heated and foamed while a fixed interval between the thickness regulating bodies is maintained,

The three methods described above are preferred, but in certain cases, the following method is also used:

**(4)** A core material, a cover material, and a thermoplastic resin body are prepared beforehand. The core material is covered with the cover material or covered with the thermoplastic resin using thermal fusion or an adhesive to form a plastic foam material.

Method **(3)** must be used if a plastic foam material is to be made such that the cross-section of the cover material and the resin body forms a honeycomb shape.

In the methods described above, the high-foaming resin core material and the low-foaming resin cover material contain a thermoplastic resin which is thermoplastic, together with a foaming agent. The resin cover material contains a thermoplastic resin.

The thermoplastic resin described above need not be particularly specified as it can include at least one of resins such as low-density polyethylene, high-density polyethylene, straight-chain low-density polyethylene, random polypropylene, homopolypropylene, block polypropylene, polyvinyl chloride, chlorinated polyvinyl chloride, ABS resin, polystyrene, polycarbonate, polyamide, polyvinylidene fluoride, polyphenylene sulfide, polysulfone, polyether ether ketone, or copolymers thereof.

Using one, or a mixture of, olefin resins such as low-density polyethylene, high-density polyethylene, straight-chain low-density polyethylene, random polypropylene, homopolypropylene, or block polypropylene as the thermoplastic resin is preferred in the high foaming resin core material, the low foaming resin cover material, and the resin cover material because the plastic foam material would have improved resiliency. In particular, high-density polyethylene and homopolypropylene are especially desirable

The thermoplastic resin used in the high foaming resin core material and the low foaming resin cover material can be cross-linked. The method used for cross-linking may include the same methods recited previously with regards to embodiment 3.

The silane-modified thermoplastic resins for use in melt-mulling are similar to the ones used in embodiment 3.

Similar to embodiment 3, silane-modified thermoplastic resin refers to a thermoplastic resin modified with an unsaturated silane compound.

Generally, unsaturated silane compounds are expressed as

$$RR'_nSiY_{3-n}$$

where:

R includes an alkenyl exemplified by vinyl, allyl, propenyl, or cyclohexenyl or an organic functional group such as a halogenated alkyl exemplified by glycidyl, amino, methacryl, $\gamma$-chloroethyl, or $\gamma$-bromoethyl;
R' includes an aliphatic saturated aromatic hydrocarbon such as methyl, ethyl, propyl, or decyl;
Y includes a hydrolytic organic function group such as methoxy, ethoxy, formyloxy, propionoxy allyl amino; and
n is 0, 1,or 2.

In particular, an unsaturated silane compound represented by

$$CH_2=CHSi(OA)_3$$

is desirable because of its fast cross-linking reaction,

where

A is an aliphatic saturated hydrocarbon with 1 to 8 carbons, with 1 to 4 carbons being preferred. Examples of the unsaturated compound exemplified by $CH_2=CHSi(OA)_3$ include vinyl trimethoxy silane, vinyl triethoxy silane, and vinyl triacetoxy silane.

The method for making the silane-modified thermoplastic resin described above can be a conventional method, and is not particularly specified. For example, a silane-modified polyethylene can be made by performing a reaction with polyethylene, an organic peroxide, and an unsaturated silane compound expressed as

$$RR'SiY_2,$$

where:

R is an olefin unsaturated group I hydrocarbon or a hydrocarbonoxy,
Y includes a hydrolytic organic group, and
R' is either a R group or a Y group as defined above.

In silane-modified thermoplastic resins having a silyl group, for example, if Y is a methoxy, contact with water leads to hydrolysis, thus creating a hydroxyl. The hydroxyl of different molecules react, creating an Si-O-Si bond, thereby effectively cross-linking the silane-modified thermoplastic resins.

The method for mixing the silane-modified thermoplastic resin is similar to embodiment 3.

The water processing step including is also similar to the step utilized in the third embodiment.

Water processing may be performed by exposure to steam under pressure and at a temperature higher than 100 °C.

If the water or steam temperature during water processing is too low, the cross-linking reaction proceeds too slowly. If the temperature is too high, the outer materials fuse to each other. Therefore, a temperature of from about 50 to about 130 °C is desirable, preferably from about 90 to about 120 °C.

If the duration of the water processing is too short, the cross-linking reaction may not proceed to completion, and if the duration is too long, the outer materials may fuse to each other. Therefore, a duration time of from 5 minutes to about 12 hours is preferred.

Excessive amounts of the silane-modified thermoplastic resin causes excessive cross-linking which in turn yields a plastic foam material with a low expansion ratio. Alternatively, if the amount is too small, the foam cells burst, preventing uniform cells. Therefore, about 5 to about 50 parts by weight of the silane-modified thermoplastic resin to 100 parts by weight of thermoplastic resin is preferred, more preferably from about 20 to about 35 parts by weight.

Similar to the previous embodiments, a cross-linking catalyst may be added if necessary to effectively cross-link the various resins. Suitable examples of cross-linking catalysts have been described with regard to the previous embodiments.

It is preferable that the amount of the cross-linking catalyst per 100 parts by weight of the thermoplastic resin be from about 0.001 - 10 parts by weight, and more preferably from about 0.01 to about 0.1 parts by weight.

The peroxide used in the cross-linking method is the same as previously described. The peroxide for use in the cross-linking gent is similar to the one used in the previous embodiments. In particular, dicumyl peroxide and tertian butyl cumyl peroxide are desirable, and dicumyl peroxide is especially desirable.

For 100 parts by weight of the thermoplastic resin, it is desirable to use from about 0.5 to about 5 parts by weight of a peroxide. From about 1 to about 3 parts by weight is especially desirable.

The method for cross-linking the thermoplastic resins using radiation is similar to embodiment 3, including the specified dosages. From about 1 to about 20 Mrad of radiation dosage is preferred, with about 3 to about 10 Mrad being optimal.

The method for irradiating the thermoplastic resins may include the use of two electron beam generating devices between which a thermoplastic resin is passed, in order to irradiate the thermoplastic resins.

The "high foaming" and "low foaming" referred to in the high foaming resin core material and the low foaming resin cover material are labels referring to the relative expansion ratios of the two. Of the two foam resins, the one which produces the plastic foam material with the higher expansion ratio is called the high foaming resin, while the other is called the low foaming resin.

The foaming agent used in the high foaming resin core material and the low foaming resin cover material is not particularly specified as long as it has a higher decomposition point than the melting point of the thermoplastic resin being used. Suitable examples of foaming agent for use in conjunction with the high foaming core material and the low foaming resin cover material include inorganic thermodecomposing foaming agents such as sodium bicarbonate, ammonium carbonate, ammonium bicarbonate, azide compounds, sodium bicarbonate, azodicarbonamide, azobisisobutylonitryl, N,N'-dinitrosopentamethylene tetramine, P,P'-dinitrosopentamethylene tetramine, P,P'-oxybisbenzenesulfonyl, hydrazide, barium azodicarbonate, trihydradinotriazine. In particular, azodicarbonamide is desirable.

The expansion ratio of the cover material and the core material can be adjusted through selection of the type of thermoplastic resin used in the foaming resin, the degree of polymerization, crystallization, presence of cross-linking, density, type of thermodecomposing foaming agent and amount of foam added.

The expansion ratio is adjusted by controlling the amount of foaming agent added. In such cases, if the amount of foaming agent added is too high, cells break, preventing uniform cell formation and decreasing the compression strength of the plastic foam material, If the amount added is too low, foaming does not occur.

Accordingly, for 100 parts by weight of thermoplastic resins, it is preferable that the amount of the foaming agent be from 1 to about 25 parts by weight.

Adjustments can be made by finding the gas yield corresponding to the desired expansion ratio, and adding an amount of foaming agent capable of generating this gas yield.

The method for making the shaped foamable piece is not particularly specified. In one method, the thermoplastic resin for the high-foaming resin core material and a foaming agent or the like are fed to a twin-axis extruder. The resulting resin is melt-mulled at a temperature lower than the decomposition point of the thermodecomposing foaming agent.

The thermoplastic resin for the low-foaming resin cover material, a foaming agent or the thermoplastic resin for the low-foaming resin cover material are fed into a different twin-axis extruder and then co-extruded at a temperature lower than the decomposition point of the thermodecomposing foaming agent.

Co-extrusion is performed to extrude a strand-shaped body, which is then cut to prescribed dimensions.

In yet another method, the thermoplastic resin for the high foaming resin core material and a foaming agent are fed to a twin-axis extruder. The resin is extruded at a temperature lower than the decomposition point of the foaming agent. A strand-shaped body is extruded and cut. This is then immersed in an organic solvent in which is dissolved either a low foaming resin or a thermoplastic resin.

If the method involving immersion in an organic solvent is used, the organic solvent is not particularly specified as long as it can dissolve the thermoplastic resin used in the cover material, and the thermodecomposing foaming agent. Examples include aromatic hydrocarbons such as toluene and xylene, halogenated hydrocarbons such as methylene chloride and dichloromethane, and ketone compounds such as acetone and methylethyl ketone.

Specifically, it is desirable to use methylene chloride if the thermoplastic resin for the cover material is polystyrene or polyvinyl chloride, and it is desirable to use methylethyl ketone if polyvinyl chloride is to be used.

The shape of the foamable piece is not important. The shape can include a circular column or a polygonal column such as a square column or a triangular column. A circular column shape should have a symmetrical cross-section in the plastic foam material, so that there is no fluctuation in foaming. This permits the cover material or the thermoplastic resin body to have a neat lattice shape or honeycomb shape, thus providing improved rigidity in the compression strength in the final plastic foam material.

When a circular column shape is used as the foamable piece, its average cross-sectional diameter should be from about 3 to about 20 mm, with a diameter of from 5 to about 10 mm being preferred.

When the diameter of the circular column shape exceeds 20 mm, the ratio of width to height is thought to be considerably high, which substantially weakens the plastic foam material. Alternatively, if the diameter of the foamable circular shape falls below 3 mm, the plastic foam material is very heavy.

If the low-foaming resin cover material is thicker than 3 mm, the plastic foam material is increasingly heavy. If the low-foaming resin cover material is thinner than 0.05 mm, the compression strength of the plastic foam material is considerable weakened.

For similar reasons, it is desirable that the thickness of the resin cover material be from about 0.05 to about 5.0 mm, and more preferable that the thickness be from about 0.5 to about 3.0 mm,

The plurality of shaped foam pieces used in the present embodiment needs to have the same height. In the present embodiment however, they do not need to have the exact same heights as long as their heights are roughly the same.

The thickness regulating bodies used in the present embodiment are determined by a heating method but are not particularly specified. For example, if heating is done by circulating oil, metal can be used. If heating is done through hot air, mesh can be used,

The thickness regulating bodies can be stationary or they can be moving at a fixed speed.

However, if the thickness regulating bodies are driven at a fixed speed, the pair of thickness regulating bodies need to move in the same direction at the same speed.

The method of feeding the shaped foam pieces to the first thickness regulating body is not particularly specified as long as the bottom surface of the shaped foam pieces touch the first thickness regulating body. For example, a rotating roller having holes for the shaped foam pieces arranged perpendicular to the circumference can be used so that shaped foam pieces are supplied to the upper part, and the shaped foam pieces fall straight down from the lower part.

It is desirable that the shaped foamable pieces be arranged in a roughly uniform manner so that the expansion ratio of the plastic foam material does not exhibit local variations.

When the shaped foam pieces are placed on the first thickness regulating body so that their bottom surfaces touch the regulating body and adjacent cover materials fuse together during foaming, It is desirable to arrange the foam pieces so that they have fixed vertical and horizontal intervals. This permits the cross section of the thermoplastic resin or the cover material to form an orderly lattice, thus increasing compression strength in the final plastic foam material.

Also, by arranging the shaped foam pieces so that the center of the bottom surface is positioned at the center and vertices of hexagons making up an imaginary honeycomb arranged on the first thickness regulating body, the cross section of the cover material or the thermoplastic resin is an orderly honeycomb shape. This provides further improvements in the compression strength of the final plastic foam material.

The center of the bottom surface of a shaped foamable piece referred to here refers not to the precise center, but to the central region of the bottom surface.

The length of a side of the hexagon making up the honeycomb shape is determined by factors such as the expansion ratio of the cover and core materials, the thickness of the thermoplastic resin and the desired plastic foam material compression strength. If the sides are too long, the compression strength of the plastic foam material decreases, while if they are too short, the expansion ratio of the plastic foam material decreases. Therefore a length of 5-100 mm is desirable, with a range of 10-50 mm being especially desirable,

Furthermore, it is preferred that the hexagons which make up the imaginary honeycomb shape on the first thickness regulating body should be equilateral. Further, it is preferred that these hexagons fulfill the conditions in the equation:

$$R^2 \leq L^2 \leq TS/\sqrt{3},$$

where:

L is the length of one side of the equilateral hexagon,
T is the expansion ratio of the core material,
S is the area of the bottom surface of the shaped foam piece, and
R is the maximum length of the bottom surface of the shaped foam piece. (The maximum length of the bottom surface of the shaped foam piece refers to the length of the longest line on the bottom surface connecting the two points on the outer perimeter of the bottom surface).

When using circular column-shaped foamable pieces, if the hexagons making up the imaginary honeycomb on the first thickness regulating body are equilateral, it is preferred that the high foaming resin core material column body to fulfill the conditions of the equation:

$$4r^2 \leq L'^2 \leq T'r\pi/\sqrt{3},$$

where:

L' is the length of one side of an equilateral hexagon,
T' is the expansion ratio of the core material, and
r is the radius of the bottom surface of the high foaming resin core material column, which is covered by the low foaming resin cover material.

When shaped foamable pieces with a high-foaming resin core material materials covered entirely by low foaming resin cover materials or resin cover materials are used, the method of sending them to the first thickness regulating body Is not particularly specified as long as they do not overlap. One possible method is to scatter the shaped foam pieces arbitrarily onto the first thickness regulating body, and then vibrate the first thickness regulating body so that overlaps are eliminated and the shaped foam pieces are distributed evenly.

The use of a reinforcing sheet between the thickness regulating body and the shaped foamable pieces improves the compression strength of the plastic foam material and is desirable. The sheet can comprise material such as glass paper, chopped-strand mats, thermoplastic resin sheets, thermosetting resin sheets or metal sheets.

If the glass paper or the glass fibers used therein are too heavy, the plastic foam material is too heavy. If they are too light, the strength of the plastic foam material is inadequate. Therefore a weight of from about 10 to about 100 $g/m^2$ is desirable, with 20 to about 50 $g/m^2$ being especially desirable.

The thermoplastic resin used in the thermoplastic resin sheet described above is not particularly specified and can be made from polyethylene, polypropylene or polyethylene terephthalate. It is desirable to use the same type of polyolefin resin as is used in the plastic foam material so that the sheet and the plastic foam material can adhere well to each other.

The thermosetting resin used in the thermosetting resin sheet described above is similar to the ones used in embodiment 3.

If the sheet described above is too thick, the resulting plastic foam material is too heavy. Alternatively, if the sheet is very thin, the plastic foam material is not reinforced adequately. Accordingly, a sheet measuring in thickness from about 0.05 to about 1 mm is preferred, with a thickness of from about 0.1 to about 0.5 mm being optimal.

The details of the method involving supporting the shaped foam pieces between the thickness regulating bodies and applying heat while a fixed distance is maintained between the thickness regulating bodies are not particularly specified as long as the temperature goes above the decomposition point of the thermodecomposing foaming agent forming the high-foaming resin core material and the low-foaming resin cover material.

For example, heat can be applied using an electric heater, a far-infrared radiation heater or a heating device circulating a heating medium such as oil or air.

To reiterate, the plastic foam material of the present embodiment comprises a cover material and a core material, or a thermoplastic resin body and a core material. The cover material and the thermoplastic resin body have a cross-section shaped in the form of a lattice or a honeycomb.

The cover material and the thermoplastic resin are, in relative terms, low foaming or non-foaming, providing superior compression strength. On the other hand, the core material is relatively high foaming, and although compressibility decreases, it is very light. Therefore, in the present embodiment, the cover material and the thermoplastic resin body make up for the shortcomings of the core material, while conversely, the core material makes up for the shortcomings of the cover material or the thermoplastic resin body. This provides a product that is light and has superior compression strength.

The expansion ratio of the core material generally ranges from about 10 to about 50, a range in which lightness is not greatly compromised. Since the expansion ratio of the cover material is lower than that of the core material by a ratio of 5 or more, compression strength is good.

Furthermore, since the cover material and the thermoplastic resin have a cross-section shape of a lattice or honeycomb-shape, the compression strength is further improved.

In the plastic foam material of the present embodiment, the cover material and the thermoplastic resin body form a lattice, providing superior properties such as compression strength. This is the result of the method for making foam bodies of the present embodiment, in which shaped foam pieces, comprising a core material and a cover material covering at least the side surfaces of the core material, are arranged so that their bottom surfaces are on a first thickness regulating body and so that they form a lattice pattern in which adjacent cover materials fuses together.

A second thickness regulating body is arranged above, and foaming takes place while a fixed distance is maintained between the thickness regulating bodies. This makes foaming of the shaped foam piece possible only in the direction parallel to the surfaces of the thickness regulating bodies, and the arrangement is such that the cover materials fuse together.

Furthermore the final foam bodies have improved properties such as compression strength because the cross-section of the cover material and the thermoplastic resin forms a honeycomb shape. This is the result of arranging the shaped foam pieces on the first thickness regulating body so that the center of the bottom surfaces are positioned at the center and the vertices of the hexagons making up an imaginary honeycomb-shape arranged on the first thickness regulating body, and so that adjacent cover materials fuse together when foaming takes place. The second thickness regulating body is then arranged from the top, and heat is applied so that foaming can take place while a fixed interval is maintained between the thickness regulating bodies.

Also, during this process, if the arrangement fulfills the conditions of the equation:

$$R^2 \leq L^2 \leq TS/\sqrt{3},$$

the cross-section of the thermoplastic resin body and the core material can form an orderly honeycomb shape, thus improving the properties of the plastic foam material such as the compression strength.

If the shaped foam pieces are shaped as circular columns and are arranged to fulfill the conditions of the equation:

$$4r^2 \leq L'^2 \leq T'\pi/\sqrt{3},$$

foaming can take place evenly because of the symmetry of the shaped foam pieces. Thus, an even more orderly honeycomb shape is provided for the cross section of the cover material and the thermoplastic resin body, and the properties of the plastic foam material such as compression strength are improved.

If shaped foam pieces in which the entire surface of the core material is covered by the cover material, there is no need to arrange them on the first thickness regulating body so that their bottom surfaces touch the thickness regulating body, This simplifies the implementation of the embodiment.

## Example 26

High-density polyethylene exemplified by Mitsubishi Petrochemicals product name EY 40H, polypropylene exemplified by Mitsubishi Petrochemicals product name PY230, silane graft polypropylene exemplified by Mitsubishi Petrochemicals product name XPM 800H, and azodicarbonamide are contained in the amounts shown in Table 4 in the composition forming the high-foaming resin core material. This composition is then fed to a 50 mm diameter single axis extruder, melt-mulled at 180 °C, and extruded as a circular strand having a 5 mm diameter circular cross-section. High-density polyethylene exemplified by Mitsubishi Petrochemicals product name EY40H, polypropylene exemplified by Mitsubishi Petrochemicals product name PY230, silane-modified thermoplastic polypropylene exemplified by Mitsubishi Petrochemicals product name XPM800H, and azodicarbonamide are contained in the amounts shown in Table 6 in the composition forming the low foaming resin core material. This composition is then fed to a 25 mm diameter single-axis extruder, melt-mulled at 180 °C, and double-extruded with a cross-head die so that it covers the strand described above. A strand with a circular cross-section is extruded, cooled, cut to 25 mm lengths, immersed in water for one hour at 98 °C, and dried. This produces a shaped foam piece 52 which is 25 mm high and has a low foaming resin cover material 1.0 mm thick and a high-foaming resin core material 5 mm in diameter. The resulting shaped foam pieces are placed on lower continuous drive belt in the quantity 1325 g/m² in a lattice arrangement so that the bottom surfaces touch the drive belt and adjacent cover materials fuse together. Shaped foam pieces, arranged between continuous drive belts are heated to 200 °C by preheating device. Thickness regulating bodies, maintain a fixed distance between continuous drive belts while heating device applies 220 °C, foaming the foam pieces. A cooling device cools to 30 °C, resulting in a plastic foam material in which the cross-section of the core material forms a lattice shape.

Table 4 shows the results of measuring the following factors according to the methods described below: the expansion ratios of the core material and the cover material, the bending strength of plastic foam

| | | Example 26 | 27 | 28 | 29 | 30 | 31 | 32 | 33 | 34 | 35 |
|---|---|---|---|---|---|---|---|---|---|---|---|
| High foaming resin core material layer | High-density polyethylene | 50 | 50 | 50 | 50 | 50 | 50 | 50 | 50 | 50 | 50 |
| | Polypropylene | 50 | 50 | 50 | 50 | 50 | 50 | 50 | 50 | 50 | 50 |
| | Silane graft polyethylene | 20 | 20 | 20 | 20 | 20 | 20 | 20 | 20 | 20 | 20 |
| | Azodicarbonamide | 8 | 8 | 8 | 8 | 8 | 8 | 8 | 8 | 8 | 8 |
| Low foaming resin cover material layer | High-density polyethylene | 50 | 50 | — | — | 50 | 50 | 50 | 50 | 50 | 50 |
| | Polypropylene | 50 | 50 | — | — | 50 | 50 | 50 | 50 | 50 | 50 |
| | Silane-graft polyethylene | 20 | 20 | — | — | 20 | 20 | 20 | 20 | 20 | 20 |
| | Azodicarbonamide | 2 | 2 | 2 | 2 | 2 | 2 | 2 | 2 | 2 | 2 |
| | Polystyrene | — | — | 100 | 100 | | | | | | |
| Shape of shaped foam pieces | | circ. | circ. | circ. | circ. | sq. | sq. | sq. | circ. | circ. | sq. |
| Distribution (g/m²) | | 1325 | 1325 | 1325 | 1325 | 1325 | 1280 | 1325 | 1325 | 1325 | 1325 |
| Glass paper (Yes/No) | | N | Y | N | N | N | N | N | N | N | Y |
| Area of core material covered by cover layer | | sides | sides | all | all | sides | sides | sides | sides | sides | sides |
| Arrangement of shaped foam pieces | | n1 | n1 | n1 | n2 | n3 | n3 | n4 | n3 | n5 | n3 |
| Expansion factor of core layer | | 20 | 20 | 20 | 20 | 20 | 20 | 20 | 20 | 20 | 20 |
| Expansion factor of cover layer | | 5 | 5 | 5 | 5 | 5 | 12.5 | 5 | 5 | 5 | 5 |
| Bending strength (Kg/cm²) | | 8.5 | 18.7 | 9.2 | 9.0 | 8.7 | 8.2 | 9.5 | 8.9 | 9.8 | 20.7 |
| 25% compression strength (kg/cm²) | | 2.30 | 2.34 | 5.00 | 4.87 | 4.80 | 2.38 | 5.02 | 4.98 | 5.38 | 4.86 |
| Compression setting (%) | | 7.1 | 7.3 | 8.2 | 8.1 | 7.3 | 7.1 | 7.5 | 7.4 | 7.7 | 7.4 |
| Heat conductivity (kcal/mhr°C) | | 0.03 | 0.03 | 0.03 | 0.03 | 0.03 | 0.025 | 0.03 | 0.03 | 0.03 | 0.03 |

Notes n1-n5 are explained at the bottom of Table 6.

Table 4

material, the 25% compression strength, compression setting, and heat conductivity.

The expansion ratio is measured according to JIS K6767. The bending strength is measured according to JIS A9511. The 25% compression strength is measured according to JIS K6767. The compression setting is measured according to JIS K6767. The heat conductivity is measured according to JIS A1413.

**Example 27**

Glass paper exemplified by Oribest Corp. product name FEO-025 is arranged on lower continuous drive belt. Shaped foam pieces as obtained in Example 26 are arranged on the glass paper at 1325 g/m² so that the bottom

26

surface touches the glass paper and so that adjacent cover materials fuse together. Glass paper exemplified by Oribest Corp. product name FEO-025 is also arranged between the shaped foam pieces and upper continuous drive belt . Otherwise a plastic foam material with the core material having a lattice-shaped cross-section is obtained in the same way as in Example 26.

The expansion ratios of the core material and the cover material making up final plastic foam material, the bending strength of plastic foam material, the 25% compression strength, the compression setting, and the heat conductivity are measured using the same methods as in Example 26, and the results are shown in Table 4.

**Example 28**

A composition indicated in Table 4 for a high foaming resin core material, as in Example 26, is fed to a 50 mm diameter single-axis extruder, melt-mulled at 180 °C, and extruded as a strand having a circular cross section 5 mm in diameter. The resulting strand is cut in lengths of 25 mm, immersed in water for an hour at 98 °C, and then left to dry. This produces a preliminary shaped foam piece 25 mm in height and having a 5 mm diameter.

The preliminary shaped foam piece is immersed for 10 minutes in an organic solvent solution formed by a polystyrene exemplified by Asahi Kasei Kogyo Corp. Ltd. product name GP Staroyn 691 and azodicarbonamide, in the amounts shown in Table 4, dissolved in 30 parts by weight of methylene chloride. This is then dried at 25 °C. The process is repeated nine times to produce shaped foam pieces having a low foaming resin cover material 1.00 mm thick.

Resulting foam pieces are processed in the same way as in Example 38 to produce a plastic foam material with the core material cross-section forming a lattice shape.

The expansion ratios of the core material and the cover material making up final plastic foam material, the bending strength of plastic foam material, the 25% compression strength, the compression setting, and the heat conductivity are measured using the same methods as in Example 26, and the results are shown in Table 4.

**Example 29**

A plastic foam material with the core material cross-section forming a lattice shape is produced in the same manner as in Example 28 except that shaped foam pieces arranged on lower continuous drive belt do not necessarily have their lower surfaces touching continuous drive belt as long as the foam pieces do not overlap.

The expansion ratios of the core material and the cover material making up final plastic foam material, the bending strength of plastic foam material, the 25% compression strength, the compression setting, and the heat conductivity are measured using the same methods as in Example 26, and the results are shown in Table 4.

**Example 30**

A high-foaming resin core material composition identical to the one in Example 26, as shown in Table 4, is fed to a 50 mm diameter single-axis extruder, melt-mulled at 180 °C, and extruded as a strand with a rectangular cross-section having 4 mm sides. A low-foaming resin cover material composition identical to the one in Example 26, as shown in Table 4, is fed to a 25 mm diameter single-axis extruder, melt-mulled at 180 °C, co-extruded with a cross-head die, cooled, cut into 25 mm lengths, immersed in water at 98 °C for an hour and left out to dry. The result is shaped foam pieces with low-foaming resin cover materials 1.0 mm thick, with high-foaming resin core material materials having square 4 mm x 4 mm cross-sections, with a height of 25 mm.

Resulting shaped foam pieces are arranged at 1325 g/m$^2$ on lower continuous drive belt so that their bottom surfaces touch the drive belt and so that the center of their bottom surfaces are positioned at the centers and vertices of hexagons that form an imaginary honeycomb arranged on lower continuous drive belt. Shaped foam pieces, arranged between continuous drive belts, are heated by preheating device at 200 °C and then heated by heating device at 220 °C while thickness regulating bodies maintain a fixed distance between continuous drive belts to produce foaming. After foaming, cooling device cools the product to 30 °C, The result is plastic foam material whose cover materials have a honeycomb-shaped cross-section,

The expansion ratios of the core material and the cover material making up final plastic foam material, the bending strength of plastic foam material , the 25% compression strength, the compression setting, and the heat conductivity are measured using the same methods as in Example 26, and the results are shown in Table 4.

**Example 31**

Shaped foam pieces are produced according to the same method used in Example 26 except that the amount of azodicarbonamide added to produce the low-foaming resin cover material is 5 parts by weight.

Using these shaped foam pieces, plastic foam material with a cover material having a honeycomb-shaped cross-section is produced in the same manner as in example 5 except that a distribution of 1280 g/cm$^2$ is used.

The expansion ratios of the core material and the cover material making up final plastic foam material, the bending strength of plastic foam material, the 25% compression strength, the compression setting, and the heat conductivity are measured using the same methods as in Example 26, and the results are shown in Table 4.

## Example 32

Using shaped foam pieces as produced in Example 30, plastic foam material with a cover material having a honeycomb-shaped cross-section is produced in the same manner as in Example 30 except that shaped foam pieces are arranged on lower continuous drive belt 51b so that each shaped foam piece is positioned on a vertex or center of an equilateral hexagon having 13 mm sides making up an imaginary honeycomb arranged on lower belt drive. The length L of the sides of the equilateral hexagons making up the honeycomb is 13 mm, expansion ratio T of the cover material is 20, the area **S** of the bottom surface of the shaped foam pieces is 17.64 mm$^2$, and the maximum length **R** of the bottom surface of the shaped foam pieces is 5.93 mm.

The expansion ratios of the core material and the cover material making up final plastic foam material, the bending strength of plastic foam material, the 25% compression strength, the compression setting, and the heat conductivity are measured using the same methods as in Example 26, and the results are shown in Table 4.

## Example 33

Using shaped foam pieces as produced in Example 26, plastic foam material with the cover material having a honeycomb-shaped cross-section is produced in the same manner as in example.

The expansion ratios of the core material and the cover material making up final plastic foam material 57, the bending strength of plastic foam material 57, the 25% compression strength, the compression setting, and the heat conductivity are measured using the same methods as in Example 26, and the results are shown in Table 4.

## Example 34

Using shaped foam pieces as produced in Example 26, plastic foam material with the cover material having a honeycomb-shaped cross-section is produced in the same manner as in Example 32. The length L' of the sides of the equilateral hexagons making up the honeycomb is 15 mm, the expansion ratio T' of the cover material is 20, and the radius r of the bottom surface of the shaped foam pieces is 2.6 mm$^2$.

The expansion ratios of the core material and the cover material making up final plastic foam material, the bending strength of plastic foam material, the 25% compression strength, the compression setting, and the heat conductivity are measured using the same methods as in Example 26, and the results are shown in Table 4.

## Example 35

Plastic foam material with the cover material having a honeycomb-shaped cross-section is produced in the same manner as in Example 30 except that glass paper exemplified by Oribest Corp. product name FEO-025 is arranged on lower continuous drive belt. Shaped foam pieces as obtained in Example 30 are arranged on the glass paper at 1325 g/m$^2$ so that the bottom surface touches the glass paper and so that adjacent cover materials fuse together. Glass paper exemplified by Oribest Corp. product name FEO-025 is also arranged between the shaped foam pieces and upper continuous drive belt.

The expansion ratios of the core material and the cover material making up final plastic foam material, the bending strength of plastic foam material, the 25% compression strength, the compression setting, and the heat conductivity are measured using the same methods as in Example 26, and the results are shown in Table 4.

## Example 36

High-density polyethylene exemplified by Mitsubishi Petrochemicals product name EY 40H, polypropylene exemplified by Mitsubishi Petrochemicals product name PY230, silane-modified thermoplastic polypropylene exemplified by Mitsubishi Petrochemicals product name XPM 800H, and azodicarbonamide are contained, in the amounts shown in Table 6, in the composition forming the high-foaming resin core material. This composition is then fed to a 50 mm diameter single axis extruder, melt-mulled at 180 °C, and extruded as a circular strand having a 5 mm diameter circular cross-section. Polypropylene exemplified by Mitsubishi Petrochemicals product name PY230, which makes up the resin core material, is fed to a 25 mm diameter single-axis extruder, melt-mulled at 180 °C, and co-extruded with a crosshead die so that it covers the strand described above. A strand with a circular cross-section is extruded, cooled, cut to 25 mm lengths, immersed in water for one hour at 98 °C and dried. This produces a shaped foam piece which is 25 mm high and has a low-foaming resin cover material 1.0 mm thick and a high-foaming resin core material 5 mm in diameter,

Table 5

| | | Comparative Examples | | | | |
|---|---|---|---|---|---|---|
| | | 11 | 12 | 13 | 14 | 15 |
| High foaming resin core material layer | High-density polyethylene | 50 | 50 | 50 | 50 | 50 |
| | Polypropylene | 50 | 50 | 50 | 50 | 50 |
| | Silane graft polyethylene | 20 | 20 | 20 | 20 | 20 |
| | Azodicarbonamide | 8 | 3 | 8 | 8 | 3 |
| Low foaming resin cover material layer | High-density polyethylene | -- | 50 | 50 | -- | 50 |
| | Polypropylene | -- | 50 | 50 | -- | 50 |
| | Silane graft polyethylene | -- | 20 | 20 | -- | 20 |
| | Azodicarbonamide | -- | 2 | 7 | -- | 2 |
| Shape of shaped foam pieces | | circ. | circ. | circ. | sq. | circ. |
| Distribution (g/m$^2$) | | 1250 | 3420 | 1260 | 1250 | 3420 |
| Glass paper (Yes/No) | | N | N | N | N | N |
| Area of core material covered by cover layer | | sides | sides | sides | sides | sides |
| Arrangement of shaped foam pieces | | n1 | n1 | n1 | n3 | n3 |
| Expansion ratio of core layer | | 20 | 7.5 | 20 | 20 | 7.5 |
| Expansion ratio of cover layer | | -- | 5 | 17.5 | -- | 5 |
| Bending strength (kg/cm$^2$) | | 6.5 | 12.8 | 7.2 | 6.5 | 12.8 |
| 25% compression strength (kg/cm$^2$) | | 1.23 | 9.07 | 1.39 | 1.23 | 9.39 |
| Compression setting (%) | | 6.1 | 14.5 | 6.5 | 6.1 | 15.8 |
| Heat conductivity (kcal/mhr°C) | | 0.02 | 0.04 | 0.025 | 0.02 | 0.04 |

n1: Bottom surfaces touch the first thickness regulating body.
n2: Mounted at centers and vertices of hexagons forming an imaginary honeycomb on the first thickness regulating body.

Table 6

| High foaming resin core material layer | | 36 | 37 | 38 | 39 | Example 40 | 41 | 42 | 43 | 44 |
|---|---|---|---|---|---|---|---|---|---|---|
| High-density polyethylene | | 50 | 50 | 50 | 50 | 50 | 50 | 50 | 50 | 50 |
| Polypropylene | | 50 | 50 | 50 | 50 | 50 | 50 | 50 | 50 | 50 |
| Silane graft polyethylene | | 20 | 20 | 20 | 20 | 20 | 20 | 20 | 20 | 20 |
| Azodicarbonamide | | 8 | 8 | 8 | 8 | 8 | 8 | 8 | 8 | 8 |
| Shape of shaped foam pieces | | circ. | circ. | circ. | circ. | sq. | sq. | circ. | circ. | sq. |
| Distribution (g/m²) | | 1325 | 1325 | 1325 | 1325 | 1325 | 1325 | 1325 | 1325 | 1325 |
| Glass paper (Yes/No) | | N | Y | N | N | N | N | N | N | Y |
| Area of core material covered by cover layer | | sides | sides | all | all | sides | sides | sides | sides | sides |
| Arrangement of shaped foam pieces | | n1 | n1 | n1 | n2 | n3 | n4 | n3 | n5 | n3 |
| Expansion ratio of core layer | | 20 | 20 | 20 | 20 | 20 | 20 | 20 | 20 | 20 |
| Bending strength (Kg/cm²) | | 9.3 | 20.9 | 10.5 | 10.2 | 9.5 | 10.3 | 9.8 | 10.0 | 23.8 |
| 25% compression strength (kg/cm²) | | 2.81 | 2.82 | 6.22 | 6.08 | 5.72 | 6.21 | 6.20 | 6.51 | 6.09 |
| Compression setting (%) | | 7.5 | 7.6 | 10.1 | 10.1 | 7.6 | 7.9 | 7.7 | 10.2 | 7.7 |
| Heat conductivity (kcal/mhr°C) | | 0.04 | 0.04 | 0.04 | 0.04 | 0.04 | 0.04 | 0.04 | 0.04 | 0.04 |

n1: Bottom surfaces touch first thickness regulating body.

n2: No overlapping of shaped foam pieces occurs.

n3: Mounted at centers and vertices of hexagons forming an imaginary honeycomb on the first thickness regulating body.

n4: Same as n3, except hexagons are equilateral and $R^2 \leq L^2 \leq TS/\sqrt{3}$.

n5: Same as n3, except hexagons are equilateral and $4L^2 \leq L'^2 \leq T'rw/\sqrt{3}$.

Using these shaped foam pieces, plastic foam material with a thermoplastic resin body having a lattice-shaped cross-section is produced in the same manner as in Example 26.

The expansion ratios of the cover material and the core material making up final plastic foam material, the bending strength of plastic foam material, 25 percent compression strength, compression setting and heat conductivity were measured using the same methods as in Example 26, and the results are shown in Table 6.

### Example 37

A plastic foam material with a thermoplastic resin having a lattice-shaped cross-section is produced in the same manner as in Example 27 except that shaped loam pieces obtained from Example 36 are used.

The expansion ratios of the core material and the cover material making up final plastic foam material, the bending strength of plastic foam material, the 25% compression strength, the compression setting, and the heat conductivity are measured using the same methods as in Example 26, and the results are shown in Table 6.

### Example 38

The high-foaming resin core material composition from example 36, as shown in Table 6, is fed to a 50 mm diameter single-axis extruder, melt-mulled at 180 C, extruded as a strand having a circular cross-section 5 mm in diameter, cut in 25 mm lengths, immersed in water for one hour at 98 °C and left to dry. This produces preliminary shaped foam pieces 5 mm in diameter and 25 mm high.

The resulting preliminary shaped foam pieces are immersed for 10 minutes in an organic solvent solution, in which 100 parts by weight of polystyrene exemplified by Asahi Kasei Kogyo Corp. Ltd. product name GP Staroyn 691 is dissolved in 30 parts by weight of methylene chloride. This is then dried at 25 °C. The process is repeated nine times to produce shaped foam pieces 52 with a 1.0 mm thick resin cover material.

Using resulting shaped foam pieces, plastic foam material with a thermoplastic resin body having a lattice-shaped cross-section is produced in the same manner as in Example 26.

The expansion ratios of the core material and the cover material making up final plastic foam material, the bending strength of plastic foam material, the 25% compression strength, the compression setting, and the heat conductivity are measured using the same methods as in Example 26, and the results are shown in Table 6.

### Example 39

Plastic foam material with a thermoplastic resin body having a lattice-shaped cross-section is produced in the same manner as in example 4 except for the use of shaped foam pieces obtained from Example 50.

The expansion ratios of the core material making up final plastic foam material, the bending strength of plastic foam material, the 25% compression strength, the compression setting, and the heat conductivity are measured using the same methods as in Example 26, and the results are shown in Table 6.

### Example 40

The high-foaming resin core material composition from Example 36, as shown in Table 6, is fed to a 50 mm diameter single-axis extruder, melt-mulled at 180 °C, extruded as a strand having a square cross-section with 4 mm sides, cut in 25 mm lengths, immersed in water for one hour at 98 °C and left to dry. This produces shaped foam pieces having 1.0 mm thick low-foaming resin cover materials, high-foaming resin core material materials with 4 mm x 4 mm square cross sections, and heights of 25 mm.

Plastic foam material with a thermoplastic resin body having a honeycomb-shaped cross-section is produced in the same manner as in Example 42 except that shaped foam pieces described above are used.

The expansion ratios of the core material and the cover material making up final plastic foam material, the bending strength of plastic foam material, the 25% compression strength, the compression setting, and the heat conductivity are measured using the same methods as in Example 26, and the results are shown in Table 6.

### Example 41

Plastic foam material with a thermoplastic resin body having a honeycomb-shaped cross-section is produced in the same way as described in Example 32 except for the use of shaped foam pieces obtained from Example 40.

The expansion ratios of the core material and the cover material making up final plastic foam material, the bending strength of plastic foam material, the 25% compression strength, the compression setting, and the heat conductivity are measured using the same methods as in Example 26, and the results are shown in Table 6.

### Example 42

Plastic foam material with a thermoplastic resin body having a honeycomb-shaped cross-section is produced in the same way as described in Example 33 except for the use of shaped foam pieces obtained from Example 36.

The expansion ratios of the core material and the cover material making up final plastic foam material, the bending strength of plastic foam material, the 25% compression strength, the compression setting, and the heat conductivity are measured using the same methods as in Example 26, and the results are shown in Table 6.

**Example 43**

Plastic foam material with a thermoplastic resin body having a honeycomb-shaped cross-section is produced in the same way as described in Example 34 except for the use of shaped foam pieces obtained from Example 36.

The expansion ratios of the core material and the cover material making up final plastic foam material, the bending strength of plastic foam material, the 25% compression strength, the compression setting, and the heat conductivity are measured using the same methods as in Example 26, and the results are shown in Table 6.

**Example 44**

Plastic foam material with a thermoplastic resin body having a honeycomb-shaped cross-section is produced in the same manner as in Example 40 except that glass paper exemplified by Oribest Corp. product name FEO-025 is arranged on lower continuous drive belt. Shaped foam pieces as obtained in example 15 are arranged as in example 15. Glass paper exemplified by Oribest Corp. product name FEO-025 is also arranged between the shaped foam pieces and upper continuous drive belt.

The expansion ratios of the core material making up final plastic foam material, the bending strength of plastic foam material, the 25% compression strength, the compression setting, and the heat conductivity are measured using the same methods as in Example 26, and the results are shown in Table 6.

**Comparative Example 11**

High-density polyethylene exemplified by Mitsubishi Petrochemicals product name 40H, polypropylene exemplified by Mitsubishi Petrochemicals product name PY230, silane-modified thermoplastic polypropylene exemplified by Mitsubishi Petrochemicals product name XPM 800H, and azodicarbonamide are fed to a 50 mm diameter single-axis extruder in the amounts shown in Table 7, melt-mulled at 180 °C, extruded as a strand having a circular cross-section 5.2 mm in diameter, cut to 25 mm lengths. The results are preliminary shaped foam pieces 5.2 mm in diameter and 25 mm high.

Using these preliminary shaped foam pieces, a plastic foam material is obtained in the same manner as in Example 26 except that the distribution was set to 1250 g/m$^2$.

The expansion ratio of the core material making up the plastic foam material, the bending strength of the plastic foam material, the 25% compression strength, the compression setting, and the heat conductivity are measured using the same methods as in Example 38, and the results are shown in Table 5.

**Comparative Example 12**

Shaped foam pieces were obtained in the same manner as in Example 26 except that for 50 parts by weight of high-density polyethylene, 3 parts by weight of azodicarbonamide were added to form the high-foaming resin core material.

A plastic foam material was obtained in the same manner as in Example 38 except that the distribution of the shaped foam pieces was set to 3420 g/m$^2$.

The expansion ratios of the core material and the cover material making up the plastic foam material, the bending strength of the plastic foam material, the 25% compression strengths the compression setting, and the heat conductivity are measured using the same methods as in Example 26, and the results are shown in Table 5.

**Comparative Example 13**

Shaped foam pieces are obtained in the same manner as in Example 26 except that for 50 parts by weight of high-density polyethylene, 7 parts by weight of azodicarbonamide are added to form the low-foaming resin cover material.

A plastic foam material is obtained in the same manner as in Example 26 except that the shaped foam pieces are distributed at 1260 g/m$^2$.

The expansion ratios of the core material and the cover material making up the plastic foam material, the bending strength of the plastic foam material, the 25% compression strength, the compression setting, and the heat conductivity are measured using the same methods as in Example 38, and the results are shown in Table 5.

**Comparative Example 14**

High-density polyethylene exemplified by Mitsubishi Petrochemicals product name 40H, polypropylene exemplified by Mitsubishi Petrochemicals product name PY230, silane-modified thermoplastic polypropylene exemplified by Mitsubishi Petrochemicals product name XPM 800H, and azodicarbonamide are fed to a 50 mm diameter single-axis extruder in the amounts shown in Table 7, melt-mulled at 180 °C, extruded as a strand having a 4.2 mm x 4.2 mm square cross-section, and cut to 23 mm lengths. The results are preliminary shaped foam pieces 25 mm high.

Using these preliminary shaped foam pieces, a plastic foam material is obtained in the same manner as in example 5 except that the distribution was set to 1250 g/m$^2$.

The expansion ratio of the core material making up the plastic foam material, the bending strength of the plastic foam material, the 25% compression strength, the compression setting, and the heat conductivity are measured using the same methods as in Example 26, and the results are shown in Table 5.

**Comparative Example 15**

Using shaped foam pieces obtained from Comparative Example 17, a plastic foam material is obtained in the same manner as in Example 30 except that the shaped foam pieces are distributed at 3420 g/cm$^2$.

The expansion ratios of the core material and the cover material making up the plastic foam material, the bending strength of the plastic foam material, the 25% compression strength, the compression setting, and the heat conductivity are measured using the same methods as in Example 38, and the results are shown in Table 5.

Referring to Table 4, the final foam bodies have superior compression strength, bending strength. Furthermore, when shaped foam pieces are arranged so that they are positioned at the vertices and centers of the hexagons making up a imaginary honeycomb, further improvements in the plastic foam material's compression strength and bending strength are obtained.

The composition of the present invention is as described above. The plastic foam material of the present comprises a core material having a relatively high expansion ratio and a cover material having a relatively low expansion ratio or a non-foaming thermoplastic resin. Each lattice or hexagonal space in the cover material or thermoplastic resin is formed integrally with the core material.

Because the cover material and the thermoplastic resin body have cross-sections shaped as lattices or honeycombs, the plastic foam material of the present invention provides superior compression strength. The core material is light and has good heat-insulating properties. Also, since the cover material and the core material are formed integrally in the present invention, lightness, compression strength, heat-insulating properties, as well as resilience are better than is possible by using the cover material, the core material, or the thermoplastic resin by themselves.

Also, by using the method for making foam bodies according to the present invention, it is possible to produce the foam bodies having the advantages described above very easily.

The raw material and the reagents used are listed below:

**(1) Thermoplastic resins (un-cross-linked)**

High density polyethylene 1: manufactured by Mitsubishi Petrochemical Company, Limited; commercial name EY40H; density 0.954 g/cm$^3$; melt index 1.5 g per 10 minutes.

High density polyethylene 2: manufactured by Mitsubishi Petrochemical Company, Limited; commercial name PY20A; density 0.951 g/cm$^3$; melt index 9 g per 10 minutes.

High density polyethylene 3: manufactured by Idemitsu Petrochemical Company, Limited; commercial name 130J; density 0.956 g/cm$^3$; melt index 11 g per 10 minutes.

High density polyethylene 4: manufactured by Mitsubishi Petrochemical Company, Limited; commercial name JX20; density 0.954 g/cm$^3$; melt index 20 g per 10 minutes.

High density polyethylene 5: manufactured by Mitsubishi Petrochemical Company, Limited; commercial name BZ50A; density 0.953 g/cm$^3$; melt index 0.35 g per 10 minutes,

# EP 0 646 622 B1

High density polyethylene 6: manufactured by Mitsubishi Petrochemical Company, Limited; commercial name HY330B; density 0.952 g/cm$^3$; melt index 0.6 g per 10 minutes.

Polypropylene 1: manufactured by Mitsubishi Petrochemical Company, Limited; commercial name MH6; density 0.90 g/cm$^3$; melt index 1.2 g per 10 minutes.

Polypropylene 2: manufactured by Mitsubishi Petrochemical Company, Limited; commercial name MA3; density 0.90 g/cm$^3$; melt index 11 g per 10 minutes.

Polypropylene 3: manufactured by Mitsubishi Petrochemical Company, Limited; commercial name BC5C; density 0.90 g/cm$^3$; melt index 2.8 g per 10 minutes; containing 8-10 parts by weight of ethylene component.

Ethylene-vinyl acetate copolymer: manufactured by Mitsubishi Petrochemical Company, Limited; commercial name V113K; density 0.925 g/cm$^3$; melt index 3 g per 10 minutes.

Polystyrene: manufactured by Asahi Kasei Company, Limited; commercial name 681; density 1.05 g/cm$^3$; melt index 3 g per 10 minutes.

**(2) Silane-modified thermoplastic resins**

Silane-modified, cross-linked, polyethylene: manufactured by Mitsubishi Petrochemical Company, Limited; commercial name

LINKLON HM-600; melt index 10 g per 10 minutes; gel fraction after cross-linking 60 parts by weight.

Silane-modified, cross-linked, polypropylene: manufactured by Mitsubishi Petrochemical Company, Limited; commercial name LINKLON XPM-800HM; melt index 10 g per 10 minutes; gel fraction after cross-linking 80 parts by weight.

**(3) Cross-linking catalyst**

Dibutyl tin dilaurate

**(4) Foaming Agent**

Azodicarbonamide: manufactured by Otsuka Chemical Company, Limited; commercial name SO-20; decomposition temperature 201°C.

**Claims**

1. A plastic foam material comprising:

   100 parts by weight of an uncross-linked polymer mixture containing at least two substantially incompatible thermoplastic resins selected from the group consisting of polyethylene, polypropylene, ethylene-propylene copolymer, ethylene-vinyl acetate copolymer, polystyrene;
   from about 1 to about 50 parts by weight of a silane-modified thermoplastic resin of the same polymer type as at least one of said two substantially incompatible resins;
   from about 0.001 to about 2.5 parts by weight of a cross-linking catalyst effective to cross-link said silane-modified thermoplastic resin and which initiates cross-linking reaction by water treatment; and
   from about 1 to about 20 parts by weight of a foaming agent.

2. The plastic foam material of claim 1, wherein said polypropylene includes at least one member selected from the group consisting of a homopolypropylene, block polypropylene, and random polypropylene.

3. The plastic foam material of claim 1, wherein said at least two substantially incompatible resins are selected from the group consisting of polyethylene, polypropylene, and polystyrene.

4. The plastic foam material of claim 1, wherein:

  said polyethylene includes a degree of polymerization of from about 500 to about 6000;
  said polypropylene includes a degree of polymerization of from about 800 to about 12,000; and
  said polystyrene includes a degree of polymerization of from about 250 to about 5,000.

5. The plastic foam material of claim 1, wherein said at least two substantially incompatible thermoplastic resins have a melt index of from about 0.1 to about 50 g per 10 minutes.

6. The plastic foam material of claim 1, wherein a density of said polyethylene is at least 0,91 $g/cm^3$; and

  a density of said polypropylene is at least 0.89 $g/cm^3$.

7. The plastic foam material of claim 1, wherein a density of said ethylene-vinyl acetate copolymer is from about 0.92 $g/cm^3$ to about 0.95 $g/cm^3$; and

  said density of polystyrene is at least 1.04 $g/cm^3$ to about 1.60 $g/cm^3$.

8. The plastic foam material of claim 1, wherein a difference in melt index between said two substantially incompatible thermoplastic resins is from about 3 to about 15 g per 10 minutes.

9. The plastic foam material of claim 1, wherein a gel fraction of said silane-modified thermoplastic resin, after cross-linking, is from about 60 to about 85 parts by weight. -

10. The plastic foam material of claim 1, wherein said silane-modified thermoplastic resin is at least one member selected from the group consisting of silane-modified thermoplastic resin of polyethylene, silane-modified thermoplastic, resin of polypropylene, silane-modified thermoplastic resin of an ethylene-vinyl acetate copolymer, and silane-modified thermoplastic resin of polystyrene.

11. The plastic foam material of claim 1, wherein said silane-modified thermoplastic resin includes at least one member selected from the group consisting of silane-modified thermoplastic resin of polyethylene, polypropylene and polystyrene.

12. The plastic foam material of claim 1, wherein said silane-modified thermoplastic resin includes a thermoplastic resin modified by an unsaturated silane compound by graft polymerization.

13. The plastic foam material at claim 12, wherein said unsaturated silane compound includes one represented by the following formula:

$$R'SiR''_m Y_{3-m}.$$

  where,

  R' includes at least one member selected from the group consisting of an alkenyl group, a glycidyl group, an amino group, a methacrylic group and a halogenated alkyl group;
  R'' includes at least one member selected from the group consisting of an alkyl group and an aryl group and similar groups;
  m represents one of 0, 1, or 2; and
  Y includes an organic group capable of being hydrolyzed.

14. The plastic foam material of claim 13, wherein said unsaturated silane compound includes one represented by the following formula:

$$CH_2=CHSi(OA)_3$$

where,

**A** includes a hydrocarbon group with 1 to 8 carbon atoms.

15. The plastic foam material of claim 14, wherein said **A** includes a hydrocarbon group containing from 1 to 4 carbon atoms.

16. The plastic foam material of claim 14, wherein said unsaturated silane compound is at least one member selected from the group consisting of vinyl trimethoxysilane, vinyl triethoxysilane, and vinyl triacetoxysilane.

17. The plastic foam material of claim 1, wherein said cross-linking catalyst includes at least one member selected from the group consisting of a dibutyl tin diacetate, dibutyl tin dilaurate, dioctyl tin dilaurate, tin octanoate, tin oleate, lead octanoate, 2-ethyl hexane zinc, cobalt octanoate, lead naphtenate, zinc caprylate, and zinc stearate.

18. The plastic foam material of claim 1, wherein said foaming agent is capable of decomposing at sufficiently high temperatures.

19. The plastic foam material of claim 1, wherein said foaming agent includes at least one member selected from the group consisting of an azodicarbonamide (1,1'-azobisformamide), azobisisobutylonitrile, N,N'-dinitrosopentamethylene tetramine, 4,4-oxybis(benzens sulfonyl hydrazide) barium azodicarboxylate, trihydrazinotriazine, benzene sulfonyl hydrazide and toluene sulfonyl hydrazide.

20. The plastic foam material of claim 1, wherein said foaming agent includes azodicarbonamide,

21. The plastic foam material of claim 1 further comprising: from about 1 to about 20 parts by weight of a glass fiber effective to improve strength and dimensional stability of said plastic foam material.

22. The plastic foam material of claim 21, wherein said glass fiber has a diameter of from about 5 μm to about 30 μm.

23. The plastic foam material of claim 1, wherein said silane-modified thermoplastic resin is present in an amount of from about 5 to about 40 parts by weight.

24. A method for preparing a plastic foam material comprising thermoplastic resins, comprising the steps of:

preparing about 100 parts by weight of an uncross-linked polymer mixture containing at least two substantially incompatible resins selected from the group consisting of a polyethylene, polypropylene, ethylene-propylene copolymer, ethylene-vinyl acetate copolymer, and polystyrene to form a first mixture;
adding from about 1 to about 50 parts by weight of a silane-modified thermoplastic resin of the same polymer type as at least one of said two substantially incompatible resins to said first mixture;
adding from about 0.001 to about 2.5 parts by weight of a cross-linking catalyst effective to cross-link said silane-modified thermoplastic resin and;
adding from about 1 to about 20 parts by weight of a foaming agent to said first mixture to form a blended resin composition;
extruding said blended resin composition to form one of a thermoplastic resin sheet material and a thermoplastic resin strand material;
exposing said one of said resin sheet material and resin strand material to a first cross-linking source to form a cross-linked one of said resin sheet material and resin strand material wherein the said cross-linked resin sheet and cross-linked resin strand includes only cross-linked silane-modified thermoplastic resin; and
exposing said one of said cross-linked resin sheet and said cross-linked resin strand to a foaming heat source to form said plastic foam material.

25. A method for preparing a plastic foam material comprising thermoplastic resins, comprising the steps of:

preparing from about 100 parts by weight of an uncross-linked polymer mixture containing at least two resins selected from the group consisting of polyethylene, polypropylene, and ethylene-propylene copolymer to form a first mixture;

adding from about 1 to about 50 parts by weight of a silane-modified thermoplastic resin of the same polymer type as at least one of said two resins to said first mixture;

adding from about 0.001 to about 2.5 parts by weight of a cross-linking catalyst effective to cross-link said silane-modified thermoplastic resin; adding from about 1 to about 20 parts by weight of a foaming agent to said first mixture to form a blended resin composition;

extruding said blended resin composition to form a thermoplastic resin sheet;

exposing said resin sheet to a cross-linking source to form a cross-linked resin sheet wherein the cross-linked resin sheet includes only cross-linked silane-modified thermoplastic resin; and

exposing said cross-linked resin sheet to a foaming heat source to form a plastic foam material.

26. The plastic foam material of claim 1, wherein a weight ratio of said two substantially incompatible thermoplastic resins is from about 2:8 to about 8:2.

**Patentansprüche**

1. Kunststoff-Schaummaterial, bestehend aus:

   100 Gewichtsteilen einer nicht quer vernetzten polymeren Mischung, die wenigstens zwei im wesentlichen inkompatible thermoplastische Harze aus der Gruppe, bestehend aus Polyethylen, Polypropylen, Ethylen-Propylen-Copolymer, Ethylen-Vinylacetat-Copolymer, Polystyrol enthält,
   zwischen 1 und 50 Gewichtsteilen eines silanmodifizierten thermoplastischen Harzes des gleichen Polymertyps wie wenigstens eines des genannten zwei im wesentlichen inkompatiblen Harze;
   zwischen 0,001 und etwa 2,5 Gewichtsteilen eines vernetzenden Katalysators, der das silanmodifzierte thermoplastische Harz vernetzen kann und der eine Vernetzungsreaktion durch Behandlung mit Wasser einleitet; und
   zwischen 1 und 20 Gewichtsteilen eine Schaummittels.

2. Kunststoff-Schaummaterial nach Anspruch 1, wobei das Polypropylen wenigstens ein Mitglied der Gruppe aus Homopolypropylen, Blockpolypropylen und ungeordnetem Polypropylen enthält.

3. Kunststoff-Schaummaterial nach Anspruch 1, wobei die wenigstens zwei im wesentlichen inkompatiblen Harze aus der Gruppe aus Polyethylen, Polypropylen und Polystyrol ausgewählt sind.

4. Kunststoff-Schaummaterial nach Anspruch 1, wobei:

   das Polyethylen einen Polymerisationsgrad von etwa zwischen 500 zu etwa 6.000 aufweist;
   das Polypropylen einen Polymerisationsgrad von etwa 800 bis etwa 12.000 aufweist; und
   das Polystyrol einen Polymerisationsgrad von etwa 250 bis etwa 5.000 aufweist.

5. Kunststoff-Schaummaterial nach Anspruch 1, wobei die wenigstens zwei im wesentlichen inkompatiblen thermoplastischen Harze einen Schmelzindex von etwa 0,1 bis etwa 50 g pro 10 Minuten aufweisen.

6. Kunststoff-Schaummaterial nach Anspruch 1, wobei die Dichte des Polyethylens wenigstens 0,91 g/cm$^3$ beträgt; und

   die Dichte des Polypropylens wenigstens 0,89 g/cm$^3$ beträgt.

7. Kunststoff-Schaummaterial nach Anspruch 1, wobei die Dichte des Ethylen-Vinylacetat-Copolymers zwischen etwa 0,92 g/cm$^3$ und 0,95 g/cm$^3$ beträgt; und

   die Dichte des Polypropylens zwschen wenigstens 1,04 g/cm$^3$ und etwa 1,60 g/cm$^3$ beträgt.

8. Kunststoff-Schaummaterial nach Anspruch 1, wobei der Unterschied des Schmelzpunktes zwischen den beiden im wesentlichen inkompatiblen thermoplastischen Harzen zwischen 3 bis 15 g pro 10 Minuten beträgt.

9. Kunststoff-Schaummaterial nach Anspruch 1, wobei der Gelanteil des silanmodifizierten thermoplastischen Harzes nach der Vernetzung zwischen 60 bis 85 Gewichtsanteile beträgt.

10. Kunststoff-Schaummaterial nach Anspruch 1, wobei das silanmodifizierte thermoplastische Harz wenigstens eines der Gruppe aus silanmodifiziertem thermoplastischen Harz aus Polyethylen, silanmodifiziertem thermoplastischen Harz aus Ethylen-Vinylacetat-Copolymer und silanmodifiziertem thermoplastischen Harz aus Polystyrol ist.

11. Kunststoff-Schaummaterial nach Anspruch 1, wobei das silanmodifizierte thermoplastische Harz wenigstens ein Mitglied der Gruppe aus silanmodifiziertem thermoplastischen Harz aus Polyethylen, Polypropylen und Polystyrol nthält.

12. Kunststoff-Schaummaterial nach Anspruch 1, wobei das silanmodifizierte thermoplastische Harz ein thermoplastisches Harz enthält, das durch Propfpolymerisation mit ein rungesättigten Silanverbindung modifiziert wurde.

13. Kunststoff-Schaummaterial nach Anspruch 12, wobei die ungesättigte Silanverbindung eine nach der folgenden Formel ist:

$$R'SiR''_mY_{3-m}$$

wobei

R' wenigstens ein Mitglied der Gruppe aus einer Alkenylgruppe, einer Glycidylgruppe, einer Aminogruppe, einer methacrylischen Gruppe und einer halogenierten Alkylgruppe ist;
R'' wenigstens ein Mitglied der Gruppe aus einer Alkylgruppe, einer Arylgruppe und ähnlicher Gruppen ist;
m entweder 0, 1 oder 2 ist; und
Y eine organische Gruppe ist, die hydrolisierbar ist.

14. Kunststoff-Schaummaterial nach Anspruch 13, wobei die ungesättigte Silanverbindung eine nach der folgenden Formel ist:

$$CH_2=CHSi(OA)_3$$

wobei

A eine Hydrcarbongruppe mit 1 bis 8 Kohlenstoffatomen ist.

15. Kunststoff-Schaummaterial nach Anspruch 14, wobei A eine Hydrocarbongruppe mit 1 bis 4 Kohlenstoffatomen ist.

16. Kunststoff-Schaummaterial nach Anspruch 14, wobei die ungesättigte Silanverbindung ein Mitglied der Gruppe aus Vinyltrimethoxysilan; Vinyltriethoxysilan und Vinyltriacetoxysilan ist.

17. Kunststoff-Schaummaterial nach Anspruch 1, wobei der Vernetzungskatalysator wenigstens ein Mitglied der Gruppe ausDibutylzinndiacetat, Dibutylzinn dilaurat, Dioctylzinndilaurat, Zinnoctanoat, Zinnoleat, Bleioctanoat, 2-ethylhexanzink, Kobaltostenoat, Bleinaphtenat, Zinkcaprylat und Zinkstearat ist.

18. Kunststoff-Schaummaterial nach Anspruch 1, wobei das Schaummittel sich bei genügend hohen Temperaturen zersetzen kann.

19. Kunststoff-Schaummaterial nach Anspruch 1, wobei das Schaummittel wenisgtens eines der Mitglieder aus der Gruppe aus Azodicarbonamid 81, 1'-Azobisformamid), Azobisisobutylnitril, N.N'-Dinitrosopentamethylentetramin, 4,4-Oxybis(benmzolsolfonylhydrazid)bariumazodicarboxylat, trihydrazinotriazin, Bezolsulfonylhaydrazid und Toluolsulfonylhydrazid umfaßt.

20. Kunststoff-Schaummaterial nach Anspruch 1, wobei das Schaummittel Azodicarbonamid umfaßt.

21. Kunststoff-Schaummaterial nach Anspruch 1, weiter beinhaltend:

zwischen 1 und 20 Gewichtsanteilen einer Glasfaser um die Festigkeit und Raumstabilität des Kunststoff-Schaummaterials zu verbessern.

22. Kunststoff-Schaummaterial nach Anspruch 21, wobei die Glasfaser einen Dirchmesser von 5 Mm bis 30Mm besitzt.

23. Kunststoff-Schaummaterial nach Anspruch 1, wobei das silanmodifizierte thermoplastische Harz in einer Menge von 5 bis 40 Gewichtsanteilen vorhanden ist.

24. Verfahren zur Herstellung eines Kunststoff-Schaummaterials, das thermoplastische Harze beinhaltet, bestehend aus den Schritten:

vorbereiten von ungefähr 100 Gewichtsanteilen einer nicht vernetzten Polymermischung, die wenigstens zwei im wesentlichen inkompatible Harze aus der Gruppe bestehend aus Polyethylen, Polypropylen, Ethylen-Propylen-Copolymer, Ethylen-Vinylacetat_Copolymer und Polystyrol um eine erste Mischung zu erhalten;

beigeben von ungefähr 1 bis 50 Gewichtsanteilen eines silanmodifizieren thermoplastischen Harzes der gleichen Polymerart wie wenigstens eines der zwei im wesentlichen inkompatiblen Harze zu er ersten Mischung;

beigeben von ungefähr 0,00 1 bis 2,5 Gewichtsanteilen eines Vernetzungskatalysators um das silanmodifizierte thermoplastische Harz zu vernetzen;

beigeben von ungefähr 1 bis 20 Gewichtsanteilen eines Schaummittels zu der ersten Mischung um eine gemischte Harzzusammensetzung zu erhalten;

extrudieren der gemischten Harzzusammensetzung um ein thermoplastisches Kunststofffolienmaterial oder ein thermoplastisches Kunststoffstrangmaterial zu erhalten;

aussetzen des Kunststofffolienmaterials oder des Kunststoffstrangmaterials einer ersten Vernetzungsquelle um ein vernetztes Kunststofffolienmaterial oder Kunststoffstrangmaterial zu bilden, wobei das vernetzte Kunststofffolienmaterial und das vernetzte Kunststoffstrangmaterial nur vernetztes silanmodifiziertes thermoplastisches Harz enthält; und

aussetzen des vernetzten Kunststofffolienmaterials oder des vernetzten Kunststoffstrangmaterials einer aufschäumenden Hitzequelle, um das Kunststoff-Schaummaterial zu erhalten.

25. Verfahren zur Herstellung eines Kunststoff-Schaummaterials aus thermoplastischen Harzen, bestehend aus den Schritten:

vorbereiten von ungefähr 100 Gewichtsanteilen einer nicht vernetzten Polymermischung, die wenigstens zwei im wesentlichen inkompatible Harze aus der Gruppe bestehend aus Polyethylen, Polypropylen und Ethylen-Propylen-Copolymer und Polystyrol um eine erste Mischung zu erhalten;

beigeben von ungefähr 1 bis 50 Gewichtsanteilen eines silanmodifizieren thermoplastischen Harzes der gleichen Polymerart wie wenigstens eines der zwei im wesentlichen inkompatiblen Harze zu er ersten Mischung;

beigeben von ungefähr 0,001 bis 2,5 Gewichtsanteilen eines Vernetzungskatalysators um das silanmodifizierte thermoplastische Harz zu vernetzen;

beigeben von ungefähr 1 bis 20 Gewichtsanteilen eines Schaummittels zu der ersten Mischung um eine gemischte Harzzusammensetzung zu erhalten;

extrudieren der gemischten Harzzusammensetzung um ein thermoplastisches Kunststofffolienmaterial zu erhalten;

aussetzen des Kunststofffolienmaterials einer Vernetzungsquelle um ein vernetztes Kunststofffolienmaterial zu bilden, wobei das vernetzte Kunststofffolienmaterial nur vernetztes silanmodifiziertes thermoplastisches Harz enthält; und

aussetzen des vernetzten Kunststofffolienmaterials einer aufschäumenden Hitzequelle, um das Kunststoff-Schaummaterial zu erhalten.

26. Kunststoff-Schaummaterial nach Anspruch 1, wobei ein Gewichtsverhältnis der zwei im wesentlichen inkompatiblen thermoplastische Harze zwischen 2:8 und 8:2 liegt.

**Revendications**

1. Matériau de mousse plastique comprenant:

100 parties en poids d'un mélange polymère à liaison non croisée contenant au moins deux résines thermoplastiques essentiellement incompatibles choisies parmi le groupe comprenant le polyéthylène, le polypropylène, un copolymère d'éthylène -- propylène, un copolymère d'acétate d'éthylène -- vinyle, le polystyrène;

depuis environ 1 à environ 50 parties en poids d'une résine thermoplastique silane -- modifiée du même type de polymère qu'au moins l'une desdites deux résines essentiellement incompatibles;

depuis environ 0,001 à environ 2,5 parties en poids d'un catalyseur de croisement de liaison susceptible d'assurer la liaison croisée de ladite résine thermoplastique silane - modifiée et qui démarre la réaction de croisement de liaison par traitement à l'eau ; et

depuis environ 1 à environ 20 parties en poids d'un agent de moussage.

2. Matériau de mousse plastique selon la revendication 1, dans lequel ledit polypropylène comprend au moins un élément choisi parmi le groupe comprenant un homopolypropylène, un polypropylène orienté, et un polypropylène non orienté.

3. Matériau de mousse plastique selon la revendication 1, dans lequel lesdites au moins deux résines essentiellement incompatibles sont choisies parmi le groupe comprenant le polyéthylène, le polypropylène, et le polystyrène.

4. Matériau de mousse plastique selon la revendication 1, dans lequel:

ledit polyéthylène présente un degré de polymérisation compris entre environ 500 et environ 6000; ledit polypropylène présente un degré de polymérisation compris entre environ 800 et environ 12 000; et ledit polystyrène présente un degré de polymérisation compris entre environ 250 et environ 5000.

5. Matériau de mousse plastique selon la revendication 1, dans lequel lesdites deux résines thermoplastiques essentiellement incompatibles ont un indice de fusion de environ 0,1 à environ 50g pour 10 minutes.

6. Matériau de mousse plastique selon la revendication 1, dans lequel la densité dudit polyéthylène est d'au moins 0,91 g/cm3 ; et

la densité dudit propylène est d'au moins 0,89 g/cm3.

7. Matériau de mousse plastique selon la revendication 1, dans lequel la densité dudit copolymère d'acétate d'éthylène -- vinyle est comprise entre environ 0,92g/cm3 et environ 0,95g/cm3 ; et

ladite densité du polystyrène est d'au moins 1,04g/cm3 à environ 1,60 g/cm3.

8. Matériau de mousse plastique selon la revendication 1, dans lequel la différence d'indice de fusion entre lesdites deux résines thermoplastiques essentiellement incompatibles est d'environ 3 à environ 15 g pour 10 minutes.

9. Matériau de mousse plastique selon la revendication 1, dans lequel une fraction de gel de ladite résine thermoplastique silane -- modifiée, après liaison croisée, est comprise entre environ 60 et environ 85 parties en poids.

10. Matériau de mousse plastique selon la revendication 1, dans lequel ladite résine thermoplastique silane -- modifiée est au moins un élément choisi parmi le groupe comprenant une résine thermoplastique silane -- modifiée de polyéthylène, une résine thermoplastique silane --modifiée de polypropylène, une résine thermoplastique silane -- modifiée d'un copolymère d'acétate d'éthylène -- vinyle, et une résine thermoplastique silane -- modifiée de polystyrène.

11. Matériau de mousse plastique selon la revendication 1, dans lequel ladite résine thermoplastique silane -- modifiée comprend au moins un élément choisi parmi le groupe comprenant une résine thermoplastique silane -- modifiée de polyéthylène, le polypropylène, et le polystyrène.

12. Matériau de mousse plastique selon la revendication 1, dans lequel ladite résine thermoplastique silane -- modifiée comprend une résine thermoplastique modifiée par un composé de silane non saturé par polymérisation greffée.

13. Matériau de mousse plastique selon la revendication 12, dans lequel ledit composé de silane non saturé comprend l'un des composés représenté par la formule suivante:

$$R'SiR''_mY_{3-m}$$

où,

R' comprend au moins un élément choisi parmi le groupe comprenant un groupe alcényle, un groupe glycidyle, un groupe amino, un groupe méthacrylique et un groupe alcoyle halogéné;

R" comprend au moins un élément choisi parmi le groupe comprenant un groupe alcoyle et un groupe aryle et des groupes similaires;

m est soit 0, soit 1, soit 2; et

Y comprend un groupe organique susceptible d'être hydrolysé.

14. Matériau de mousse plastique selon la revendication 13, dans lequel ledit composé de silane non saturé comprend l'un des composés représenté par la formule suivante:

$$CH_2=CHSi(OA)_3$$

où,

A comprend un groupe hydrocarboné ayant de 1 à 8 atomes de carbone.

15. Matériau de mousse de matériau plastique selon la revendication 14, dans lequel ledit A comprend un groupe hydrocarboné contenant de 1 à 4 atomes de carbone.

16. Matériau de mousse plastique selon la revendication 14, dans lequel ledit composé de silane non saturé est au moins un élément choisi dans le groupe comprenant le triméthoxysilane vinyle, le triéthoxysilane vinyle, et le triacétoxysilane vinyle.

17. Matériau de mousse plastique selon la revendication 1, dans lequel ledit catalyseur de croisement de liaison comprend au moins l'un des éléments choisi dans le groupe comprenant un diacétate d'étain dibutyle, un dilaurate d'étain dibutyle, un dilaurate d'étain dioctyle, un octanoate d'étain, un oléate d'étain, un octanoate de plomb, un hexane 2 -- éthyle de zinc, un octanoate de cobalt, un naphténate de plomb, un caprylate de zinc, et un stéarate de zinc.

18. Matériau de mousse plastique selon la revendication 1, dans lequel ledit agent de moussage est susceptible de se décomposer à des températures suffisamment élevées.

19. Matériau de mousse plastique selon la revendication 1, dans lequel ledit agent de moussage comprend au moins un élément choisi parmi le groupe comprenant un azodicarbonamide (1,1'-azobisformamide), un azobisisobutylonitrile, une N,N'-dinitrosopentaméthylène tétramine, un 4,4-oxybis (benzène sulfonyle hydrazide), un azodicarboxylate de baryum, une trihydrazinotriazine, un benzène sulfonyle hydrazide et un toluène sulfonyle hydrazide.

20. Matériau de mousse plastique selon la revendication 1, dans lequel ledit agent de moussage comprend l'azodicarbonamide.

21. Matériau de mousse plastique selon la revendication 1, comprenant en outre:

de 1 à environ 20 parties en poids d'une fibre de verre susceptible d'améliorer la résistance et la stabilité dimensionnelle dudit matériau de mousse plastique.

22. Matériau de mousse plastique selon la revendication 21, dans lequel ladite fibre de verre a un diamètre allant depuis environ 5 μm à environ 30 μm.

23. Matériau de mousse plastique selon la revendication 1, dans lequel ladite résine thermoplastique silane -- modifiée est présente dans une quantité allant depuis environ 5 à environ 40 parties en poids.

24. Procédé de préparation d'un matériau de mousse plastique comprenant des résines thermoplastiques, comprenant les étapes consistant a:

préparer environ 100 parties en poids d'un mélange polymère à liaison non croisée contenant au moins deux résines thermoplastiques essentiellement incompatibles choisies parmi le groupe comprenant le polyéthylène, le polypropylène, un copolymère d'éthylène -- propylène, un copolymère d'acétate d'éthylène -- vinyle, et le polystyrène pour former un premier mélange;

ajouter depuis environ 1 à environ 50 parties en poids d'une résine thermoplastique silane -- modifiée du même type de polymère qu'au moins l'une desdites deux résines essentiellement incompatibles audit premier mélange;

ajouter depuis environ 0,001 à environ 2,5 parties en poids d'un catalyseur de croisement de liaison susceptible d'assurer la liaison croisée de ladite résine thermoplastique silane - modifiée et;

ajouter depuis environ 1 à environ 20 parties en poids d'un agent de moussage audit premier mélange pour former une composition de résine mélangée;

extruder ladite composition de résine mélangée pour former soit un matériau en feuille d'une résine thermoplastique soit un matériau en brin d'une résine thermoplastique;

exposer ledit matériau en feuille de résine ou ledit matériau en brin de résine à une première source de croisement de liaison pour former soit un matériau en feuille de résine soit un matériau en brin de résine à liaison croisée, où ladite feuille de résine à liaison croisée et ledit brin de résine à liaison croisée comprennent seulement une résine thermoplastique à liaison croisée silane -- modifiée; et

exposer ledit matériau en feuille de résine à liaison croisée ou ledit matériau en brin de résine à liaison croisée à une source de chauffage de moussage pour former ledit matériau de mousse plastique.

25. Procédé de préparation d'un matériau de mousse plastique comprenant des résines thermoplastiques, comprenant les étapes consistant a:

préparer environ 100 parties en poids d'un mélange polymère à liaison non croisée contenant au moins deux résines thermoplastiques essentiellement incompatibles choisies parmi le groupe comprenant le polyéthylène, le polypropylène, et un copolymère d'éthylène - propylène pour former un premier mélange;

ajouter depuis environ 1 à environ 50 parties en poids d'une résine thermoplastique silane -- modifiée du même type de polymère qu'au moins l'une desdites deux résines audit premier mélange;

ajouter depuis environ 0,001 à environ 2,5 parties en poids d'un catalyseur de croisement de liaison susceptible d'assurer la liaison croisée de ladite résine thermoplastique silane -- modifiée;

ajouter depuis environ 1 à environ 20 parties en poids d'un agent de moussage audit premier mélange pour former une composition de résine mélangée;

extruder ladite composition de résine mélangée pour former une feuille de résine thermoplastique;

exposer ladite feuille de résine à une source de croisement de liaison pour former une feuille de résine à liaison croisée où ladite feuille de résine à liaison croisée comprend seulement une résine thermoplastique à liaison croisée silane -- modifiée ; et

exposer ladite feuille de résine à liaison croisée à une source de chaleur de moussage pour former un matériau de mousse plastique.

26. Matériau de mousse plastique selon la revendication 1, dans lequel le rapport pondéral desdites deux résines thermoplastiques essentiellement incompatibles est compris entre environ 2/8 et environ 8/2.